# EUROPEAN PATENT APPLICATION

(11) **EP 4 848 861 A1**
(43) Date of publication of application: **02.12.2026**
(21) Application number: 24920414.0
(22) Date of filing: 23.01.2024
(51) Int. Cl.: H04W 72/1273, H04W 16/28, H04W 72/23

(54) **TERMINAL, WIRELESS COMMUNICATION METHOD, AND BASE STATION**

(71) Applicant: NTT DOCOMO, INC., Tokyo 100-6150 (JP)
(72) Inventor: OKUMURA, Mamoru, Tokyo 100-6150 (JP); MATSUMURA, Yuki, Tokyo 100-6150 (JP); NAGATA, Satoshi, Tokyo 100-6150 (JP)
(74) Representative: Hoffmann Eitle
(86) International application number: PCT/JP2024/001825
(87) International publication number: WO 2025/158524

(57) **Abstract**

A terminal according to an aspect of the present disclosure includes a receiving section that receives at least one of a configuration for high mobility and an indication for the high mobility, and a control section that controls reception of a downlink reference signal, based on at least one of the configuration and the indication. According to an aspect of the present disclosure, transmission processing/reception processing of signals can be appropriately performed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (e.g., Rel. 20 or later versions), a study is underway to utilize a frequency band higher than a frequency band used in the existing systems (e.g., up to Rel. 18).

However, a study of definitions for utilizing the high frequency band is insufficient. In a case of the insufficient study of this, communication throughput improvement may be possibly suppressed.

Thus, an object of the present disclosure is to provide a terminal, a radio communication method, and a base station capable of appropriately performing signal reception processing.

### Solution to Problem

A terminal according to an aspect of the present disclosure includes a receiving section that receives at least one of a configuration for high mobility and an indication for the high mobility, and a control section that controls reception of a downlink reference signal, based on at least one of the configuration and the indication.

### Advantageous Effects of Invention

According to an aspect of the present disclosure, transmission processing/reception processing of signals can be appropriately performed.

### Brief Description of Drawings

[FIG. 1] FIGS. 1A and 1B are diagrams to show an overview of MIMO.
[FIG. 2] FIG. 2A is a diagram to show an overview of a cellular system. FIG. 2B is a diagram to show an overview of a cell-free system.
[FIG. 3] FIGS. 3A to 3C are diagrams to show examples of overviews of respective assumptions of cell-free structures.
[FIG. 4] FIG. 4 is a diagram to show an example of patterns for components of one PCI (PCI components).
[FIG. 5] FIGS. 5A to 5E are diagrams each to show an example of a structure of a first cell.
[FIG. 6] FIG. 6 is a diagram to show an example of patterns for components of one area (area components).
[FIG. 7] FIG. 7A is a diagram to show an example of structures of first/second cells for Option 1.1. FIG. 7B is a diagram to show an example of structures of the first/second cells for Option 1.2.
[FIG. 8] FIG. 8A is a diagram to show an example of structures of the first/second cells for Option 2/4.1. FIG. 8B is a diagram to show an example of structures of the first/second cells for Option 2/4.2.
[FIG. 9] FIG. 9A is a diagram to show an example of structures of the first/second cells for Option 3/5.1. FIG. 9B is a diagram to show an example of structures of the first/second cells for Option 3/5.2.
[FIG. 10] FIG. 10 is a diagram to show an example of a change in the structure of the second cell.
[FIG. 11] FIGS. 11A to 11C are diagrams each to show an example of a structure of the second cell for Option 0.3.
[FIG. 12] FIGS. 12A and 12B are diagrams each to show an example of communication between a moving object and a transmission point (e.g., RRH).
[FIG. 13] FIGS. 13A to 13C are diagrams to show examples of schemes 0 to 2 for an SFN, respectively.
[FIG. 14] FIGS. 14A and 14B are diagrams each to show an example of the scheme 1.
[FIG. 15] FIGS. 15A to 15C are diagrams each to show an example of an NW pre-compensation scheme.
[FIG. 16] FIG. 16 is a diagram to show an example of a framework for an AI model management.
[FIG. 17] FIG. 17A is a diagram to show an example of a CRS arrangement in an LTE system. FIG. 17B is a diagram to show an example of a TRS arrangement in an NR system.
[FIG. 18] FIG. 18 is a diagram to show an example of a TRS arrangement according to Embodiment 1-3.
[FIG. 19] FIG. 19 is a diagram to show an example of Doppler estimation according to a second embodiment.
[FIG. 20] FIG. 20 is a diagram to show an example of a schematic structure of a radio communication system according to one embodiment.
[FIG. 21] FIG. 21 is a diagram to show an example of a structure of a base station according to one embodiment.
[FIG. 22] FIG. 22 is a diagram to show an example of a structure of a user terminal according to one embodiment.
[FIG. 23] FIG. 23 is a diagram to show an example of a hardware structure of the base station and the user terminal according to one embodiment.
[FIG. 24] FIG. 24 is a diagram to show an example of a vehicle according to one embodiment.

### Description of Embodiments

### (Cell-Free)

In an existing radio communication system (e.g., 5G NR), a cellular scheme has been employed in which one cell is formed basically by one antenna/transmission/reception point (TRP). An area formed by the cell is fixed/static.

In the existing radio communication system (e.g., Rel. 16 or later versions), distributed Multi Input Multi Output (Distributed MIMO, for example, multi-TRP utilizing a plurality of TRPs) has been introduced in which a communication area is formed by coverages of a plurality of antennas/TRPs. In distributed MIMO, simultaneous communication using a plurality of antennas/TRPs and communication using one antenna/TRP can be performed.

Employing of distributed MIMO enables a more preferable line-of-sight environment to be prepared and performance related to MIMO to be improved.

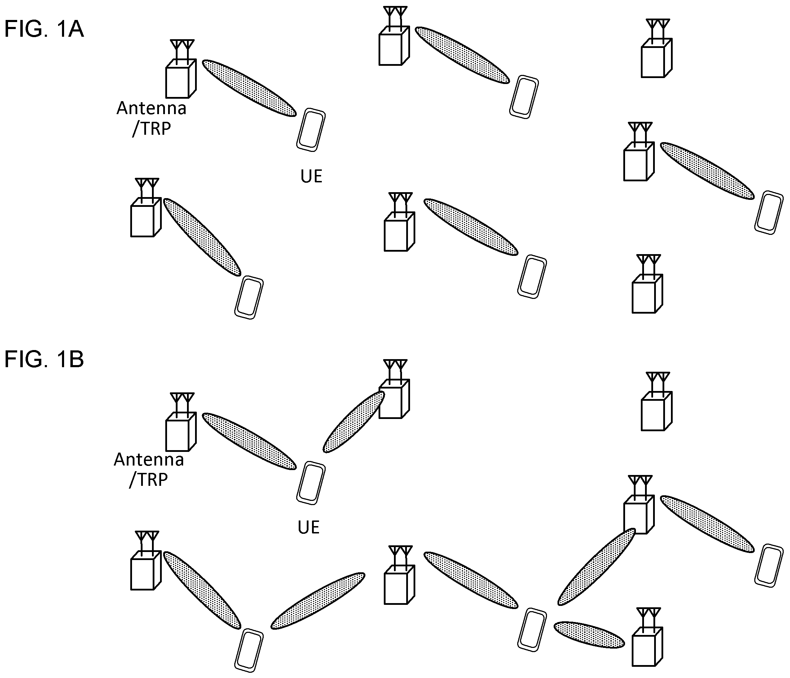

FIGS. 1A and 1B are diagrams to show an overview of MIMO. FIG. 1A shows an example of Co-located MIMO. In Co-located MIMO, one UE communicates with one antenna/TRP.

On the other hand, FIG. 1B shows an example of distributed MIMO. In distributed MIMO, one UE communicates with a plurality of antennas/TRPs cooperating.

In the future radio communication systems (e.g., Rel. 20 or later versions), a study is underway to introduce cell-free communication aiming at further improved performance and increased efficiency in energy consumption by way of reduction of interference between the plurality of antennas/TRPs, preparation of the line-of-sight environment corresponding to utilization of high frequency, improvement in frequency utilization efficiency in the entire systems, and application of equivalent and higher quality communication to every user.

The cell-free may be referred to as cell-free massive MIMO (mMIMO) or large-scale distributed MIMO (D-MIMO). The cell-free uses coherent cooperation of many access points. The cell-free may include at least one of ultra-dense deployment, scalable cooperation, user-centric clustering, super carrier aggregation, and analog fronthaul. A user plane for the cell-free may perform more flexible scheduling than the existing scheduling. A control plane for the cell-free may maintain some forms of cell for facilitating signaling.

In the cell-free, unlike the cellular scheme of related art, a plurality of antennas/TRPs may form one area (which may also be referred to as a cell/sub-cell or the like). That is, the area may mean a cell independent of a location of an antenna/TRP.

In the cell-free, a set of antennas/TRPs used for area forming may be changed depending on demand of the UE. For example, the set of antennas/TRPs may be changed based not on the coverage of the antenna/TRP, but on the number of UEs/the number of traffics/communication usage (e.g., initial access/data communication/measurement/report, etc.) or the like.

In other words, in the cell-free, the coverages among a plurality of antennas/TRPs may overlap each other.

In the cell-free, a direction in which a synchronization signal (which may also be referred to as, for example, synchronization signal block (SSB), synchronization signal/physical broadcast channel (SS/PBCH) block, or the like) is transmitted may be controlled at each antenna/TRP.

In the cell-free, a central unit (CU)/distributed unit (DU) may be virtualized for each antenna. Alternatively, each antenna may be managed in only the CU.

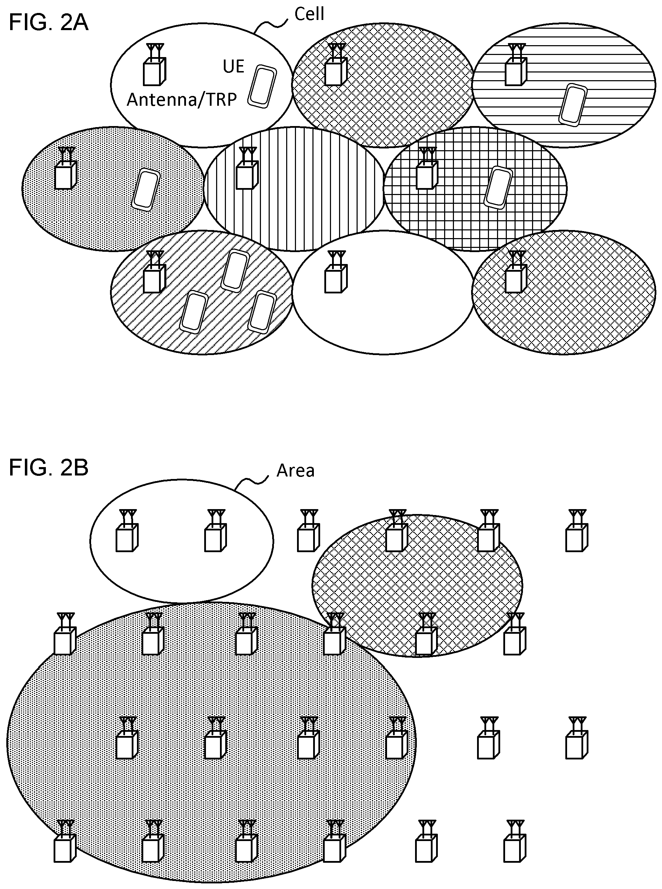

FIG. 2A is a diagram to show an overview of a cellular system. FIG. 2A shows cells formed by respective antennas/TRPs, where the UE perform communication based on the corresponding cell.

On the other hand, FIG. 2B is a diagram to show an overview of a cell-free system. In an example shown in FIG. 2B, each of located antennas/TRPs does not form a fixed/static cell in the cellular system. As shown in FIG. 2B, in the cell-free system, one or a plurality of antennas/TRPs form an area in accordance with conditions. Therefore, in the cell-free system, the respective antennas/TRPs may not correspond to the same physical cell ID, and areas among the plurality of antennas/TRPs may overlap.

The cell-free may be realized by, for example, a set of antennas/TRPs controlled by a central control unit (e.g., CU) being coordinated.

In the cell-free system, a first cell and a second cell may be formed, where the first cell (which may also be referred to as, for example, cell/super cell/macro cell/large cell, etc.) has a physical range fixed, like a cell in a 5G NR system, and the second cell (which may also be referred to as, for example, sub-cell/area/micro cell/cell/small cell/the second cell in the first cell, etc.) has a physical range semi-statically/dynamically varying based on conditions.

For example, the first cell may be referred to as a super cell to be distinguished from the second cell. In a case where a super cell includes a plurality of second cells, the second cell may have definition/operation/coverage similar to those in the existing cell in the NR. For example, the second cell may be referred to as a sub-cell to be distinguished from the first cell. In a case where the super cell or the cell includes a plurality of sub-cells, the sub-cell may have definition/operation/coverage similar to those in the existing cell in the NR.

The first cell may be a cell which is newly defined in the future radio communication systems, or for which the definition of the cell in the existing radio communication systems is reused.

Assumptions 1 and 2 below is conceivable for structures of the first cell and the second cell.

Assumption 1: the first cell includes a plurality of TRPs having one cell ID (physical cell ID (PCI)). A plurality of TRPs can transmit and receive in cooperation.

Assumption 2: the first cell includes a plurality of TRPs (or sub-cells) having different cell IDs. A plurality of TRPs/sub-cells can transmit and receive in cooperation.

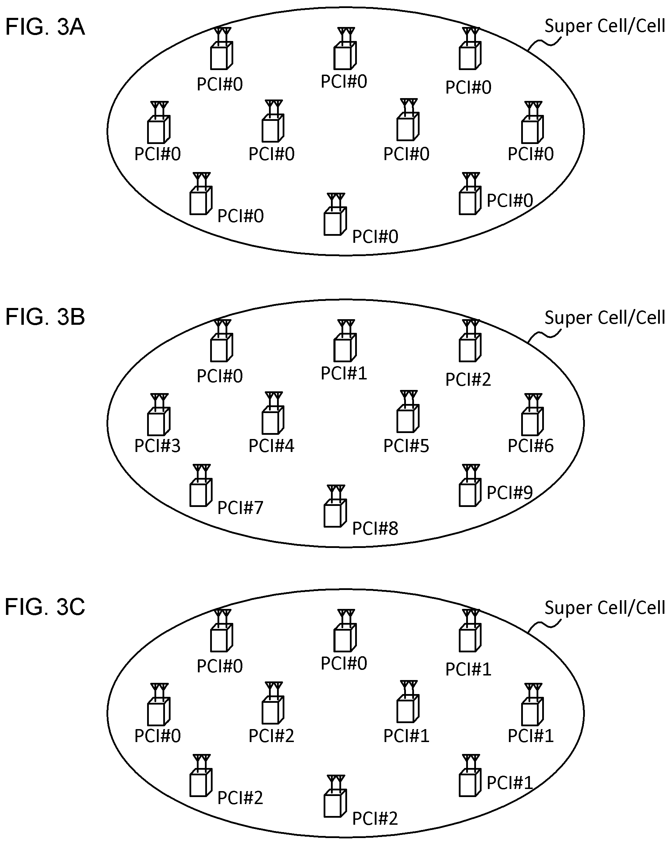

FIG. 3A is a diagram to show an example of an overview of the assumption 1 of a cell-free structure. In the example shown in FIG. 3A, the TRPs included in the first cell (super cell/cell) have the same PCI (PCI #0). A plurality of TRPs can perform communication with respect to one UE in cooperation communication.

FIG. 3B is a diagram to show an example of an overview of the assumption 2 of the cell-free structure. In the example shown in FIG. 3B, the TRPs included in the first cell (super cell/cell) have different PCIs (PCIs #0 to #9). A plurality of TRPs can perform communication with respect to one UE in cooperation communication.

FIG. 3C is a diagram to show another example of the overview of the assumption 2 of the cell-free structure. In the example shown in FIG. 3C, each of the TRPs included in the first cell (super cell/cell) is assigned with the PCI. In the example shown in FIG. 3C, one same PCI may be a plurality of TRPs, unlike the example of FIG. 3B. A plurality of TRPs can perform communication with respect to one UE in cooperation communication.

Transmission/reception in cooperation with the TRPs/sub-cells may be based on at least one of following some schemes supported in the NR.
- Single TRP/sub-cell transmission with dynamic TRP/sub-cell switching.
- Joint transmission using a plurality of TRPs/sub-cells (multi-TRP joint transmission). The joint transmission may be based on a single DCI or multi-DCI. The joint transmission may be non-coherent joint transmission (NCJT), or coherent joint transmission (CJT).

Assuming a close cooperation with an ideal backhaul for the cell-free, in a joint transmission scheme, the CJT may be prioritized over the NCJT, and single DCI-based joint transmission may be prioritized over multi-DCI-based joint transmission.

### (Structures in Cell-Free)

Examples of structures in the cell-free are described below.

In the present disclosure, "cell having physical range fixed," "cell not changed," "first cell," "super cell," "cell," "macro cell," "large cell," and the like may be interchangeably interpreted.

In the present disclosure, "cell having physical range semi-statically/dynamically varying based on conditions," "cell changed," "second cell," "cell," "area," "micro cell," "small cell," "second cell in first cell," and the like may be interchangeably interpreted.

In the present disclosure, "area," "cell," "coverage," "range," and the like may be interchangeably interpreted.

A first cell may include one or more second cells.

One second cell may be included in a plurality of first cells. Different first cells may share one second cell.

Different first cells may or may not overlap each other.

The UE may utilize a second cell included in a first cell to transmit/receive a signal. The UE may receive a configuration related to the second cell to transmit/receive a signal based on the configuration.

Components of one physical cell ID (PCI) may include at least one of the following items.
- The number of TRPs per PCI.
- TRP coverage layout.
- The number of synchronization signals (e.g., SSBs, SS/PBCH blocks) per TRP.

The structure of the first cell may be associated with the PCI components. The first cell may be structured based on the PCI components.

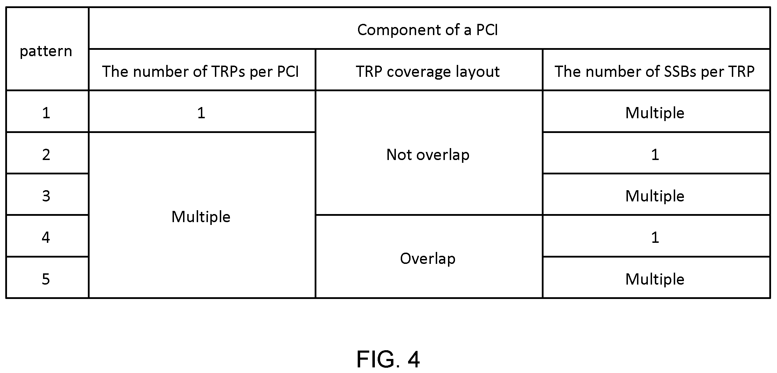

FIG. 4 is a diagram to show an example of patterns for components of one PCI (PCI components). As shown in FIG. 4, the PCI components include the number of TRPs per PCI, the TRP coverage layout, and the number of SSBs per TRP.

As shown in FIG. 4, the number of TRPs per PCI may take one or a plurality of values, the TRP coverage layout may take whether or not the TRP coverages overlap each other, and the number of SSBs per TRP may take one or a plurality of values.

In the present disclosure, patterns for the PCI component may be any one of patterns 1 to 5 shown in FIG. 4. Any number of the pattern shown in FIG. 4 is an example, and is not limited to this example. The PCI component may include elements other than elements shown in FIG. 4.

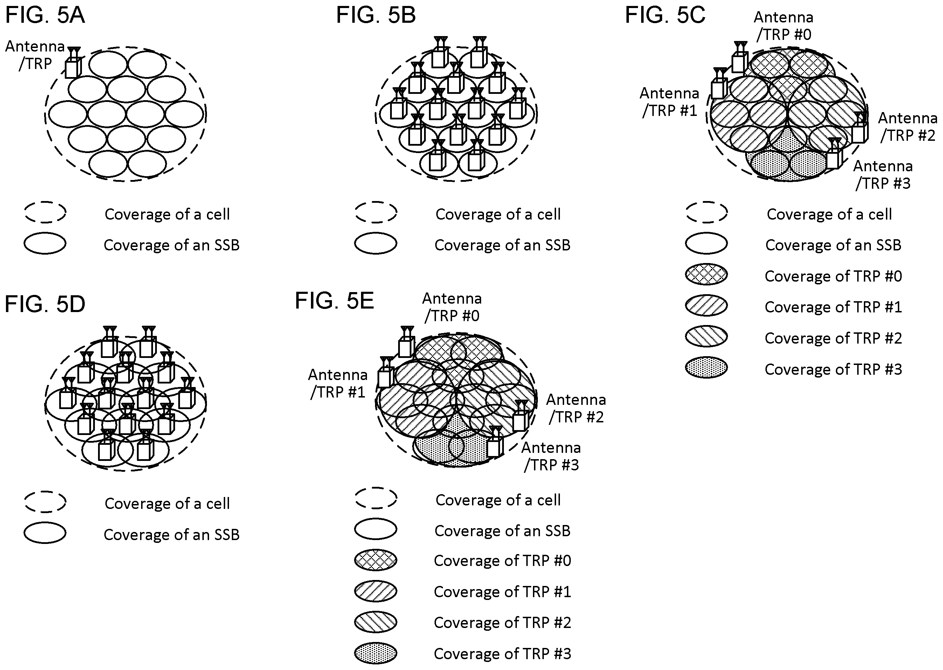

FIG. 5A is a diagram to show an example of a cell structure in the pattern 1. In the cell structure shown in FIG. 5A, the number of TRPs included in the PCI/cell is one, the TRP coverages do not overlap each other, and the number of SSBs per TRP is more than one. Note that in the cell structure in FIG. 5A, the TRP coverage may match the coverage of the cell (the first cell) (therefore, the TRP coverage is not shown in FIG. 5A).

For example, the cell structure in the pattern 1 as shown in FIG. 5A can be utilized to perform an inter-cell multi-TRP operation.

FIG. 5B is a diagram to show an example of a cell structure in the pattern 2. In the cell structure shown in FIG. 5B, the number of TRPs included in the PCI/cell is more than one, the TRP coverages do not overlap each other, and the number of SSBs per TRP is one. Note that in the cell structure in FIG. 5B, the TRP coverage may match the coverage of the SSB (therefore, the TRP coverage is not shown in FIG. 5B).

For example, the cell structure in the pattern 2 as shown in FIG. 5B can be utilized to perform the inter-cell multi-TRP operation.

FIG. 5C is a diagram to show an example of a cell structure in the pattern 3. In the cell structure shown in FIG. 5C, the number of TRPs included in the PCI/cell is more than one, the TRP coverages do not overlap each other, and the number of SSBs per TRP is more than one.

For example, the cell structure in the pattern 3 as shown in FIG. 5C can be utilized to perform the inter-cell multi-TRP operation.

FIG. 5D is a diagram to show an example of a cell structure in the pattern 4. In the cell structure shown in FIG. 5D, the number of TRPs included in the PCI/cell is more than one, the TRP coverages overlap each other, and the number of SSBs per TRP is one. Note that in the cell structure in FIG. 5D, the TRP coverage may match the coverage of the SSB (therefore, the TRP coverage is not shown in FIG. 5D).

For example, the cell structure in the pattern 4 as shown in FIG. 5D can be utilized to perform an inter-cell/intra-cell multi-TRP operation.

FIG. 5E is a diagram to show an example of a cell structure in the pattern 5. In the cell structure shown in FIG. 5E, the number of TRPs included in the PCI/cell is more than one, the TRP coverages overlap each other, and the number of SSBs per TRP is more than one.

For example, the cell structure in the pattern 5 as shown in FIG. 5E can be utilized to perform the inter-cell/intra-cell multi-TRP operation.

Components of one second cell (e.g., area) may include at least one of the following items.
- The number of CUs/DUs per second cell.
- The number of PCIs per second cell.
- The number of TRPs per second cell.
- The number of synchronization signals (e.g., SSBs, SS/PBCH blocks) per second cell.

The structure of the second cell may be associated with the components of the second cell. The second cell may be structured based on the components of the second cell.

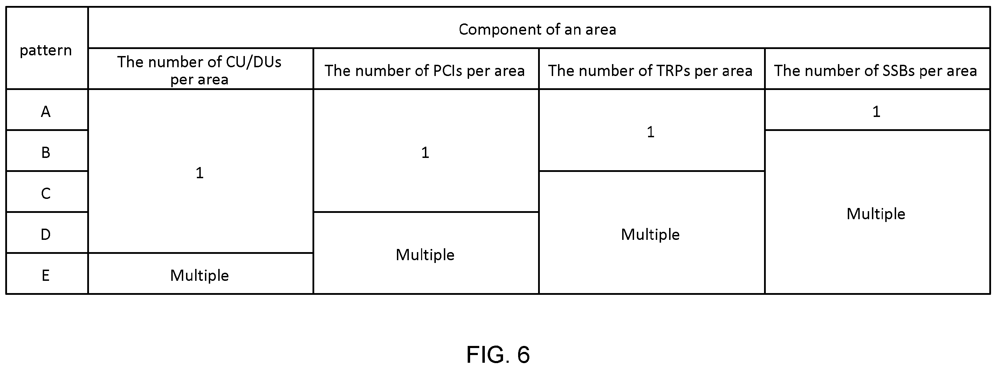

FIG. 6 is a diagram to show an example of patterns for components of one area (area components). As shown in FIG. 6, the area component includes per area the number of CUs/DUs, the number of PCIs per area, the number of TRPs per area, and the number of synchronization signals per area.

As shown in FIG. 6, each of the number of CUs/DUs per second cell, the number of PCIs per second cell, the number of TRPs per second cell, and the number of synchronization signals per second cell can take one or a plurality of values.

In the present disclosure, patterns for the area component may be any one of patterns A to E shown in FIG. 6. Any sign of the pattern shown in FIG. 6 is an example, and is not limited to this example. The area component may include elements other than elements shown in FIG. 6.

For example, the second cell in the pattern A, D, and E may be constructible in any first cell (cell structure).

A structure of the first cell/the second cell in cases where different cells overlap/do not overlap each other is described below. At least one of the structures of the first cell/the second cell set forth below may be defined/configured.

### <<Structures of First Cell/Second Cell in Pattern 1>>

### <<Option 1.1>>

The different first cells may not (physically) overlap each other.

In this option, the second cell in at least one of the above patterns A, B, D, and E may be structured.

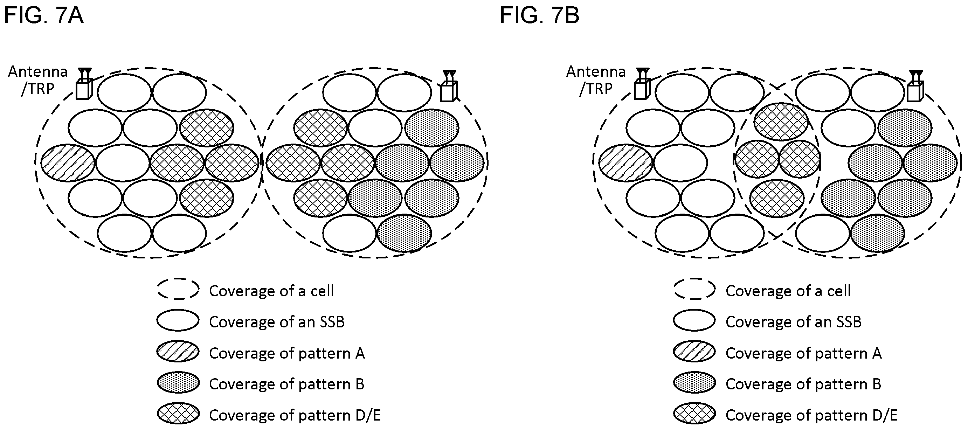

FIG. 7A is a diagram to show an example of structures of the first/second cells for Option 1.1. In the example shown in FIG. 7A, two different cells (the first cells) do not overlap each other.

The example shown in FIG. 7A shows the second cell (the coverage of the second cell) in the pattern A, the second cell (the coverage of the second cell) in the pattern B, and the second cell (the coverage of the second cell) in the patterns D/E.

Note that in the cell structure in FIG. 7A, the TRP coverage may match the coverage of the cell (the first cell) (therefore, the TRP coverage is not shown in FIG. 7A).

In the structure for this option, a single TRP operation only may be operable in each second cell.

According to the structure for this option, power reduction (network energy saving (NES)) in a more preferable network can be performed.

### <<<Option 1.2>>>

The different first cells may (physically) overlap each other.

In this option, the second cell in at least one of the above patterns A, B, D, and E may be structured.

FIG. 7B is a diagram to show an example of structures of the first/second cells for Option 1.2. In the example shown in FIG. 7B, two different cells (the first cells) overlap each other.

The example shown in FIG. 7B shows the second cell (the coverage of the second cell) in the pattern A, the second cell (the coverage of the second cell) in the pattern B, and the second cell (the coverage of the second cell) in the patterns D/E.

Note that in the cell structure in FIG. 7B, the TRP coverage may match the coverage of the cell (the first cell) (therefore, the TRP coverage is not shown in FIG. 7B).

In the structure for this option, for example, an inter-cell multi-TRP operation may be operable in the second cell in the pattern D/E.

According to the structure for this option, for example, by increasing the coverage in the overlapping cells, communication quality equivalence can be improved.

According to the structure for this option, for example, by decreasing the coverage in the overlapping cells, the frequency utilization efficiency can be improved.

In the structure for this option, reusing of the antenna/TRP of the existing NR specifications enables administration by changing an antenna/TRP apparatus to overlap the coverage deployed in the existing NR, allowing for decrease in a site acquisition cost.

### <<Structures of First Cell/Second Cell in Pattern 2/Pattern 4>>

### <<<Option 2/4.1>>>

The different first cells may not (physically) overlap each other.

In this option, the second cell in at least one of the above patterns A, C, D, and E may be structured.

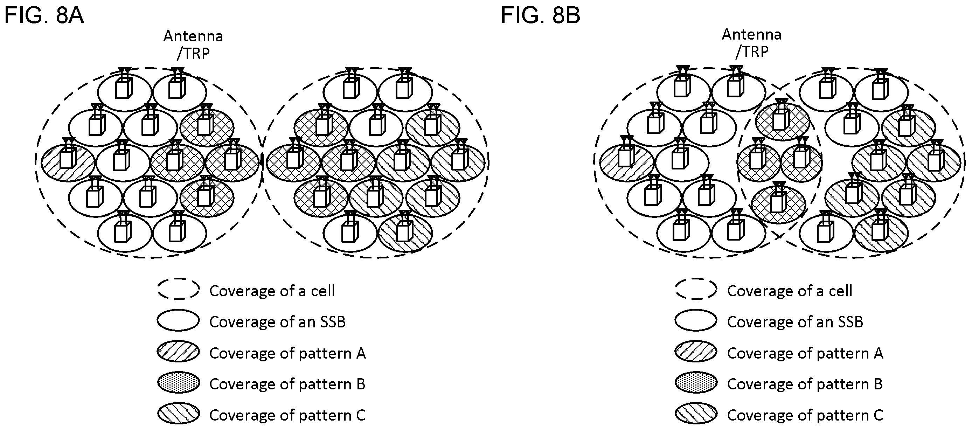

FIG. 8A is a diagram to show an example of structures of the first/second cells for Option 2/4.1. In the example shown in FIG. 8A, two different cells (the first cells) do not overlap each other.

The example shown in FIG. 8A shows the second cell (the coverage of the second cell) in the pattern A, the second cell (the coverage of the second cell) in the pattern C, and the second cell (the coverage of the second cell) in the patterns D/E.

Note that in the cell structure in FIG. 8A, the TRP coverage may match the coverage of the SSB (therefore, the TRP coverage is not shown in FIG. 8A).

In the structure for this option, a single TRP operation only may be operable in each second cell.

According to the structure for this option, for example, by increasing the number of TRPs per first cell, the communication quality equivalence and the frequency utilization efficiency can be improved.

### <<<Option 2/4.2>>>

The different first cells may (physically) overlap each other.

In this option, the second cell in at least one of the above patterns A, C, D, and E may be structured.

FIG. 8B is a diagram to show an example of structures of the first/second cells for Option 2/4.2. In the example shown in FIG. 8B, two different cells (the first cells) overlap each other.

The example shown in FIG. 8B shows the second cell (the coverage of the second cell) in the pattern A, the second cell (the coverage of the second cell) in the pattern C, and the second cell (the coverage of the second cell) in the patterns D/E.

Note that in the cell structure in FIG. 8B, the TRP coverage may match the coverage of the SSB (therefore, the TRP coverage is not shown in FIG. 8B).

In the structure for this option, for example, an inter-cell multi-TRP operation may be operable in the second cell in the pattern D/E.

According to the structure for this option, for example, by increasing the coverage in the overlapping cells, the communication quality equivalence can be improved.

According to the structure for this option, for example, by decreasing the coverage in the overlapping cells, the frequency utilization efficiency can be improved.

According to the structure for this option, for example, by increasing the number of TRPs per first cell, the communication quality equivalence and the frequency utilization efficiency can be improved.

### <<Structures of First Cell/Second Cell in Pattern 3/Pattern 5>>

### <<<Option 3/5.1>>>

The different first cells may not (physically) overlap each other.

In this option, the second cell in at least one of the above patterns A, B, C, D, and E may be structured.

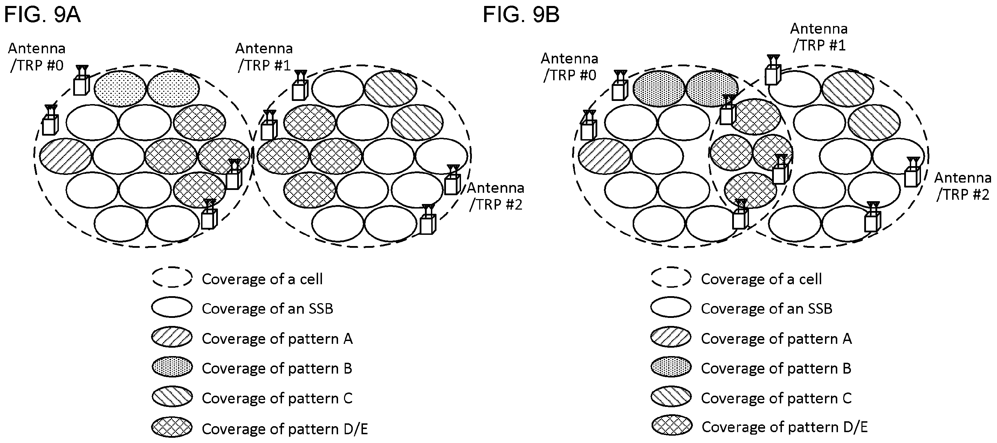

FIG. 9A is a diagram to show an example of structures of the first/second cells for Option 3/5.1. In the example shown in FIG. 9A, two different cells (the first cells) do not overlap each other.

The example shown in FIG. 9A shows the second cell (the coverage of the second cell) in the pattern A, the second cell (the coverage of the second cell) in the pattern B, the second cell (the coverage of the second cell) in the pattern C, and the second cell (the coverage of the second cell) in the patterns D/E.

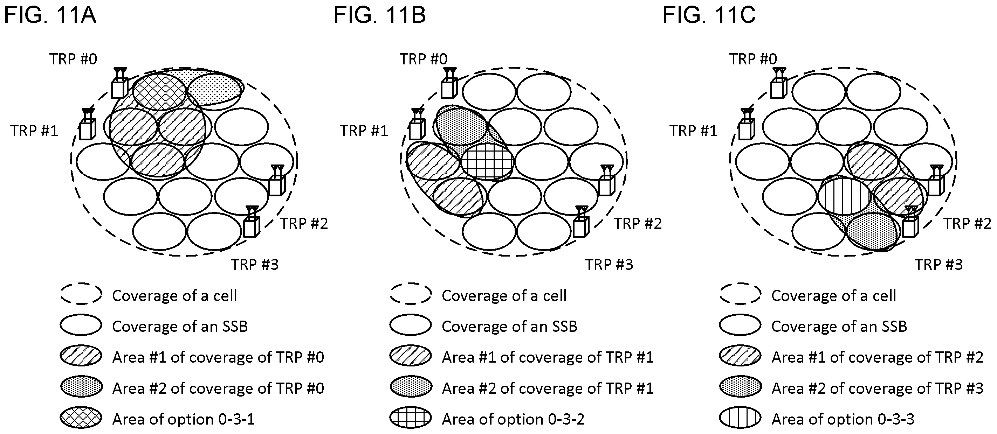

Note that an example is illustrated in which the second cell in the pattern B shown in FIG. 11A is included only in a coverage of antenna/TRP #0. An example is illustrated in which the second cell in the pattern C shown in FIG. 11A corresponds to an overlapping portion between a coverage of antenna/TRP #1 and a coverage of antenna/TRP #2.

In the structure for this option, a single TRP operation may be operable in each second cell.

In the structure for this option, an intra-cell multi-TRP operation may be operable in each second cell in which coverages of a plurality of TRPs overlap each other. The constructing in this way can improve the frequency utilization efficiency.

According to the structure for this option, for example, by increasing the number of TRPs per first cell, the communication quality equivalence and the frequency utilization efficiency can be improved.

### <<<Option 3/5.2>>>

The different first cells may (physically) overlap each other.

In this option, the second cell in at least one of the above patterns A, B, C, D, and E may be structured.

FIG. 9B is a diagram to show an example of structures of the first/second cells for Option 3/5.2. In the example shown in FIG. 9B, two different cells (the first cells) overlap each other.

The example shown in FIG. 9B shows the second cell (the coverage of the second cell) in the pattern A, the second cell (the coverage of the second cell) in the pattern B, the second cell (the coverage of the second cell) in the pattern C, and the second cell (the coverage of the second cell) in the patterns D/E.

Note that an example is illustrated in which the second cell in the pattern B shown in FIG. 9B is included only in a coverage of antenna/TRP #0. An example is illustrated in which the second cell in the pattern C shown in FIG. 9B corresponds to an overlapping portion between a coverage of antenna/TRP #1 and a coverage of antenna/TRP #2.

In the structure for this option, for example, an inter-cell multi-TRP operation may be operable in the second cell in the pattern D/E.

In the structure of this option, in a case of the cell structure in the pattern 5, an intra-cell multi-TRP operation may be operable. The constructing in this way can improve the frequency utilization efficiency.

According to the structure of this option, for example, the communication quality equivalence and the frequency utilization efficiency can be improved as compared to Option 1.2 described above, and the site acquisition cost can be suppressed as compared to Option 2/4.2 described above.

### <<Flexibility of Second Cell>>

The second cell may be constructed/reconstructed based on a specific condition/trigger. An example of a definition of the second cell is described later.

The structure of the second cell may be changed/updated based on a specific condition/trigger.

The specific condition/trigger may be, for example, at least one of a condition/trigger for UE distribution, a condition/trigger for traffic, a condition/trigger for a specific event, and a condition/trigger based on specific information (e.g., at least one of information related to time of day, location information related the UE/TRP, and information related to time of year).

For example, the condition/trigger for the UE distribution may be a condition/trigger based on the UE distribution/the number of UEs in the first cell/the second cell.

For example, the condition/trigger for the traffic may be a condition/trigger based on at least one of a traffic amount/communication amount in the first cell/the second, a traffic amount/communication amount for the TRP, and a traffic amount/communication amount for the SSB.

For example, a specific event for the condition/trigger for a specific event may be predefined in the specifications or depend on a NW implementation.

For example, the condition/trigger based on specific information may be a condition/trigger based on at least one of information related to time of day, information related to a specific timer, location information related to the UE/TRP, and information related to time of year (e.g., date and time/day of week/climate or the like).

The second cell may be statically constructed based on the specific condition/trigger, or regardless of the specific condition.

The second cell may be dynamically/semi-statically constructed based on the specific condition/trigger. The constructing in this way can reduce power consumption in the NW, and provide the communication quality meeting the demand of the UE.

Restrictions for change/update of the second cell may be defined. The NW may determine not to make change in/update of the second cell in a specific case.

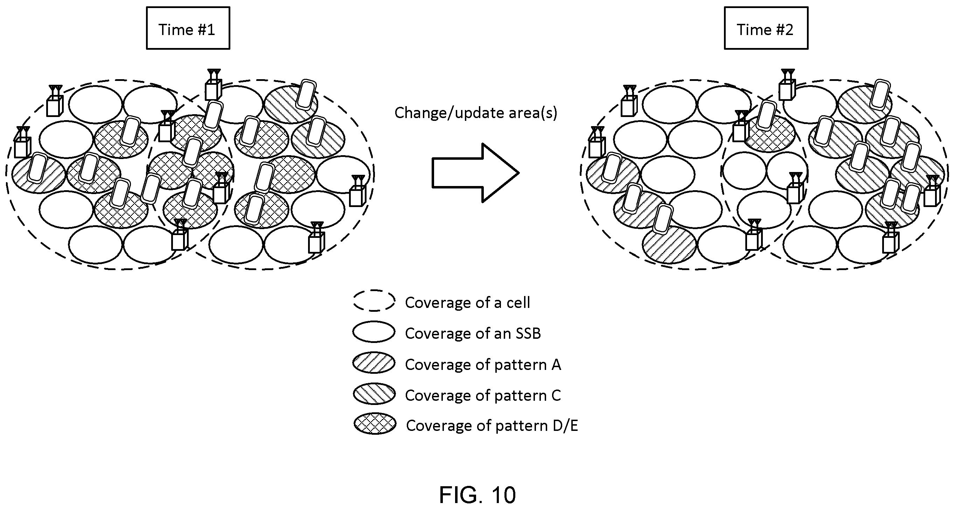

FIG. 10 is a diagram to show an example of a change in the structure of the second cell. The example shown in FIG. 10 shows a case where a range of the second cell (area) is changed in accordance with the UE distribution and change in time of day (from time of day #1 to time of day #2).

### <<Definition of Second Cell>>

Examples of structure/definition of the second cell is described below.

For the structure/definition of the second cell, at least one of Options 0.1 and 0.2 described below may be adequately and consistently combined with the description of the second cell described above.

### <<<Option 0.1>>>

The second cell may include one cell (the first cell)/PCI.

For example, the second cell may be identified by the PCI (similarly to the existing NR). For example, the second cell may include the PCI similar to the existing NR.

The PCI may be defined similarly to, for example, the PCI defined in the existing NR.

This option may correspond to the assumption 1 described above.

### [[Option 0.1.1]]

The second cell may include one TRP for one cell. In other words, one second cell may correspond to one TRP.

### [[[Option 0.1.1.1]]]

The second cell may include one synchronization signal for one cell (e.g., at least one of the SSB and the SS/PBCH block). In other words, one second cell may correspond to one synchronization signal. Such a structure corresponds to, for example, the second cell in the pattern A for at least one of Options 1.1, 1.2, 2/4.1, 2/4.2, 3/5.1 and 3/5.2 described above.

### [[[Option 0.1.1.2]]]

The second cell may include, a plurality of synchronization signals for one cell (e.g., some of the synchronization signals for one cell). In other words, one second cell may correspond to a plurality of synchronization signals (some of the synchronization signals for one cell). Such a structure corresponds to, for example, the second cell in the pattern B for at least one of Options 1.1, 1.2, 3/5.1 and 3/5.2 described above.

### [[[Option 0.1.1.3]]]

The second cell may include a plurality of synchronization signals for one cell (e.g., all the synchronization signals for one cell). In other words, one second cell may correspond to a plurality of synchronization signals (all the synchronization signals for one cell). Such a structure corresponds to, for example, the second cell in the pattern B for at least one of Options 1.1 and 1.2 described above.

### [[Option 0.1.2]]

The second cell may include a plurality of TRPs for one cell (e.g., some of the TRPs for one cell). In other words, one second cell may correspond to a plurality of TRPs (some of the TRPs for one cell).

### [[[Option 0.1.2.1]]]

The second cell may include, a plurality of synchronization signals for one cell (e.g., some of the synchronization signals for one cell). In other words, one second cell may correspond to a plurality of synchronization signals (some of the synchronization signals for one cell). Such a structure corresponds to, for example, the second cell in the pattern C for at least one of Options 2/4.1, 2/4.2, 3/5.1 and 3/5.2 described above.

### [[Option 0.1.3]]

The second cell may include a plurality of TRPs for one cell (e.g., all the TRPs for one cell). In other words, one second cell may correspond to a plurality of TRPs (all the TRPs for one cell).

### [[[Option 0.1.3.1]]]

The second cell may include one synchronization signal for one cell (e.g., at least one of the SSB and the SS/PBCH block). In other words, one second cell may correspond to one synchronization signal. Such a structure corresponds to, for example, the second cell in the pattern A for at least one of Options 1.1 and 1.2 described above.

### [[[Option 0.1.3.2]]]

The second cell may include, a plurality of synchronization signals for one cell (e.g., some of the synchronization signals for one cell). In other words, one second cell may correspond to a plurality of synchronization signals (some of the synchronization signals for one cell). Such a structure corresponds to, for example, the second cell in the pattern B for at least one of Options 1.1 and 1.2 described above, and the second cell in the pattern C for at least one of Options 3/5.1 and 3/5.2 described above.

### [[[Option 0.1.3.3]]]

The second cell may include a plurality of synchronization signals for one cell (e.g., all the synchronization signals for one cell). In other words, one second cell may correspond to a plurality of synchronization signals (all the synchronization signals for one cell). Such a structure corresponds to, for example, the second cell in the pattern B for at least one of Options 1.1 and 1.2 described above, and the second cell in the pattern C for at least one of Options 2/4.1, 2/4.2, 3/5.1 and 3/5.2 described above.

### <<<Option 0.2>>>

The second cell may include a plurality of cells (the first cells)/PCIs.

The PCI may be defined similarly to, for example, the PCI defined in the existing NR.

This option may correspond to the assumption 2 described above.

### [[Option 0.2.1]]

The second cell may include a plurality of TRPs. In other words, one second cell may correspond to a plurality of TRPs.

The TRP may be defined similarly to, for example, the TRP defined in the existing NR.

### [[[Option 0.2.1.1]]]

The second cell may include a plurality of synchronization signals. In other words, one second cell may correspond to a plurality of synchronization signals. Such a structure corresponds to, for example, the second cell in the pattern D/E for at least one of Options 1.1, 1.2, 2/4.1, 2/4.2, 3/5.1 and 3/5.2 described above.

Each option described above may be selected/decided based on the condition/trigger described above (e.g., the condition/trigger based on time of day/the number of UEs/traffics or the like).

The change/update of each option described above may be configured for/indicated to/given as a notification to the UE based on at least one of system information (e.g., SIB/MIB), higher layer signaling (RRC parameter/MAC CE) and the DCI.

The change/update of each option described above may be made based on the condition/trigger described above (e.g., timer/event), or based on the NW/UE implementation.

The second cell may be identified by a specific ID.

The specific ID may have a fixed value.

The specific ID may be a virtual ID. In other words, the specific ID is an ID that may be dynamically changed, and the structure/range/location of the second cell may be dynamically changed as the ID is changed.

A configuration/parameter common/dedicated to a plurality of second cells may be given as a notification to the UE. The configuration/parameter may be given as a notification using, for example, a higher layer (RRC) parameter.

The configuration/parameter may be for example, a configuration/parameter for the PCI/TRP/SSB.

The second cell may be used for a specific purpose/property. In other words, the second cell may be defined/constructed/identified using a specific purpose/property.

The specific purpose may be, for example, at least one of control plane, user plane, paging, measurement, report, measurement report, indication/enabling of beam, transmitting/receiving of a specific channel/signal (e.g., PUCCH/PUSCH/SRS/PDCCH/PDSCH/CSI-RS), initial access, on-demand signal, and trigger signal for handover.

The specific property may be, for example, at least one of Doppler shift, Doppler spread, average delay, average spread, band/component carrier, subcarrier spacing, TCI state, spatial relation, QCL type, timing advance value, downlink transmission timing, and RNTI.

The number (e.g., maximum number) of PCIs/TRPs/SSBs in one second cell may be predefined in the specifications, configured for/indicated to/given as a notification to the UE by way of higher layer signaling (RRC/MAC CE)/DCI, decided based on a report of UE capability information, or decided in combination with at least two of these.

The second cells may be deployed to be (physically/spatially) continuous. The second cells may be deployed to be (physically/spatially) discontinuous.

### <<Sharing between Second Cells>>

### <<<Option 0.3.1>>>

A synchronization signal (e.g., at least one of the SSB and the SS/PBCH block) may be shared between a plurality of second cells. The UE may assume being capable of receiving the same (shared/common) synchronization signal in a plurality of different second cells.

In this case, information contained in the synchronization signal may be configurable as information dedicated to the second cell.

In Option 0.3.1, a TRP/PCI may be shared between a plurality of second cells.

In Option 0.3.1, at least one of an ID for the same synchronization signal (e.g., an SSB ID/SSB index/candidate SSB index), an ID for the same TRP (e.g., at least one of an ID for identifying the TRP, a TRP ID, and a CORESET pool index), and the same PCI may be used in a plurality of second cells.

FIG. 11A is a diagram to show an example of an area for Option 0.3.1. FIG. 11A shows one cell including TRP #0 to TRP #3. In the example shown in FIG. 11A, area #1 and area #2 are formed in a coverage of TRP #0. An area where area #1 and area #2 overlap each other has the same SSB coverage. That is, area #1 and area #2 can share the same SSB/TRP/PCI in the overlapping area.

Allowing for such a structure for Option 0.3.1 allows for the structure of the most flexible second cell.

### <<<Option 0.3.2>>>

A synchronization signal may not be shared between a plurality of second cells. The UE may assume not receiving the same (shared/common) synchronization signal in a plurality of different second cells.

In this case, information contained in the synchronization signal may be configurable as information dedicated to the second cell. In this case, an index for the synchronization signal may be used to identify the second cell.

In Option 0.3.2, a TRP/PCI may be shared between a plurality of second cells.

In Option 0.3.2, at least one of an ID for the same TRP (e.g., at least one of an ID for identifying the TRP, a TRP ID, and a CORESET pool index), and the same PCI may be used in a plurality of second cells.

FIG. 11B is a diagram to show an example of an area for Option 0.3.2. FIG. 11B shows one cell including TRP #0 to TRP #3. In the example shown in FIG. 11B, area #1 and area #2 are formed in a coverage of TRP #1. Since area #1 and area #2 do not overlap each other, area #1 and area #2 have different SSB coverages. Therefore, an area included in area #1 or area #2 does not share the same SSB, and can share the same TRP/PCI.

In such a structure for Option 0.3.2, the maximum number of second cells in the first cell may be the number of synchronization signals (SSB/SSB coverage). In a case where the second cell spans a plurality of SSB coverages, the maximum number of second cells in the first cell may be the number of spanned SSBs (SSB group).

### <<<Option 0.3.3>>>

A synchronization signal and a TRP may not be shared between a plurality of second cells. The UE may assume not performing transmission/reception of a signal to and from the same TRP, and reception of the same (shared/common) synchronization signal in a plurality of different second cells.

In this case, information contained in the synchronization signal may be configurable as information dedicated to the second cell. In this case, an index for the synchronization signal may be used to identify the second cell. In this case, an ID for the TRP (ID for identifying the TRP) may be used to identify the second cell.

In Option 0.3.3, a PCI may be shared between a plurality of second cells.

In Option 0.3.3, the same PCI may be used between a plurality of second cells.

FIG. 11C is a diagram to show an example of an area for Option 0.3.3. FIG. 11C shows one cell including TRP #0 to TRP #3. In the example shown in FIG. 11C, area #1 and area #2 are formed in coverages of TRP #2 and TRP #3, respectively. Since area #1 and area #2 do not overlap each other, area #1 and area #2 have different SSB coverages. Therefore, an area included in area #1 or area #2 does not share the same SSB, and can share the same PCI.

In such a structure for Option 0.3.3, the maximum number of second cells in the first cell may be the number of TRPs. In a case where the second cell spans a plurality of TRPs, the maximum number of second cells in the first cell may be the number of TRPs (TRP group).

### <<<Option 0.3.4>>>

A synchronization signal, a TRP, and a PCI may not be shared between a plurality of second cells. The UE may assume not performing transmission/reception of a signal to and from the same cell (the first cell/PCI), transmission/reception of a signal to and from the same TRP, and reception of the same (shared/common) synchronization signal in a plurality of different second cells.

In this case, information contained in the synchronization signal may be configurable as information dedicated to the second cell. In this case, an index for the synchronization signal may be used to identify the second cell. In this case, an ID for the TRP (ID for identifying the TRP) may be used to identify the second cell. In this case, the PCI may be used to identify the second cell.

In such a structure for Option 0.3.4, the maximum number of second cells in the first cell may be one. In a case where the second cell spans a plurality of first cells, the maximum number of entire second cells may be the number of spanned first cells/PCIs (PCI group).

Each option described above may be selected/decided based on the condition/trigger described above (e.g., the condition/trigger based on time of day/the number of UEs/traffics or the like).

A configuration/indication/notification of the change/update of each option described above may be made to the UE based on at least one of system information (e.g., SIB/MIB), higher layer signaling (RRC parameter/MAC CE) and the DCI.

The change/update of each option described above may be made based on the condition/trigger described above (e.g., timer/event), or based on the NW/UE implementation.

The ID for each option described above (e.g., at least one of an ID for a synchronization signal, an ID for a TRP, and a PCI) may be a global ID (e.g., common to all NWs), or a local ID (e.g., dedicated to some NWs).

The number (e.g., the maximum number) of second cells that use at least one of the ID for the same synchronization signal, the ID for the same TRP, and the same PCI may be predefined in the specifications, configured for/indicated to/given as a notification to the UE by way of higher layer signaling (RRC/MAC CE)/DCI, decided based on a report of UE capability information, or decided in combination with at least two of these.

### (HST)

In LTE, antenna arrangement in an HST (high speed train) tunnel is difficult. A large antenna transmits to the outside/inside of the tunnel. For example, transmission power for the large antenna is about 1 to 5 W. For the handover, it is important to transmit to the outside before the UE enters the tunnel.

For example, transmission power for a small antenna is about 250 mW. A plurality of small antennas (transmission/reception points) having the same cell ID and a distance of 300 m form a single frequency network (SFN). All small antennas in the SFN transmit the same signal at the same time point on the same PRB. The UE assumes transmitting/receiving to and from one base station. Actually, a plurality of transmission/reception points transmit the same DL signal. Upon high speed moving, transmission/reception points in units of several km forms one cell. When the cell is spanned, handover is executed. This can reduce handover frequency.

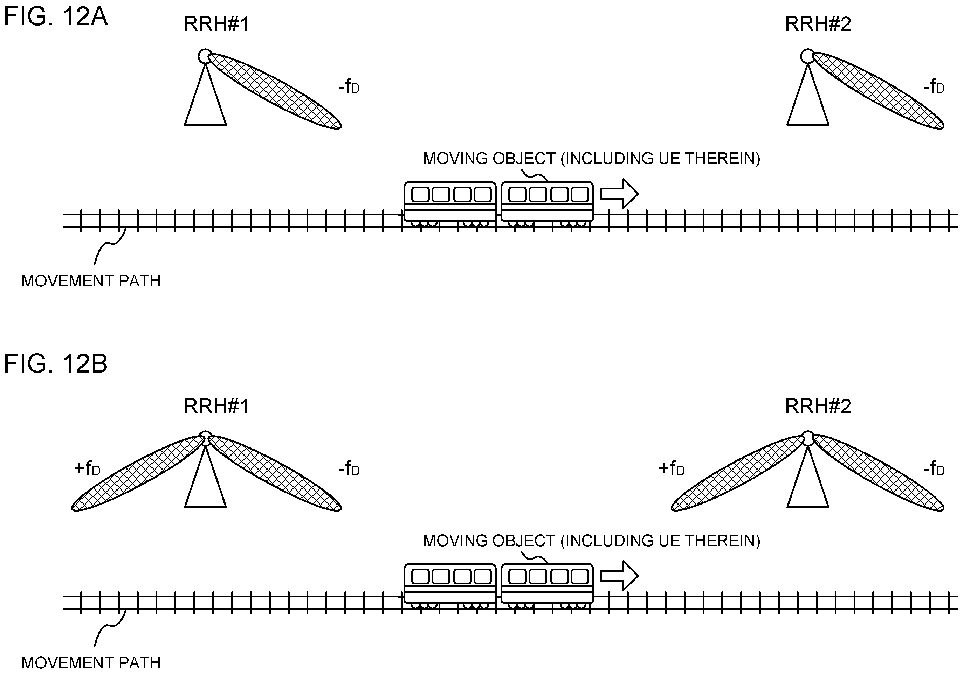

In NR, to communicate with the UE included in a moving object moving at high speed such as a train (HST), it is assumed that a beam transmitted from the transmission point (e.g., RRH) is utilized. The existing system (e.g., Rel. 15) supports transmitting a beam in one direction from the RRH to communicate with the moving object (see FIG. 12A).

FIG. 12A shows a case where the RRHs are located along a moving route (or, moving direction, travel direction, travel route) of the moving object, and a beam is formed from each RRH toward the travel direction of the moving object. The RRH forming beam in one direction may be referred to as a uni-directional RRH. In the example shown in FIG. 12A, the moving object undergoes a minus Doppler shift (-f_{D}) from each RRH.

Note that here is illustrated the case where a beam is formed toward the travel direction of the moving object, but a beam may be formed toward a direction opposite to the travel direction, or a beam may be formed toward any direction independently of the travel direction of the moving object, without limitation.

In Rel. 16 or later versions, it is assumed that a plurality of (e.g., 2 or more) beams are transmitted from the RRH. For example, it is assumed that a beam is formed toward both the travel direction of the moving object and the opposite direction thereof (see FIG. 12B).

FIG. 12B shows a case where the RRHs are located along the moving route of the moving object, and a beam is formed from each RRH toward both the travel direction of the moving object and the direction opposite to the travel direction. The RRH forming a beam in a plurality of directions (e.g., two directions) may be referred to as a bi-directional RRH.

In the HST, the UE performs communication similarly to a single TRP. In base station implementation, transmission from a plurality of TRPs (same cell ID) is allowed.

In the example shown in FIG. 12B, in a case where two RRHs (here, RRH #1 and RRH #2) use the SFN, the moving object is switched, at halfway between two RRHs, a signal undergoing from a minus Doppler shift to a signal undergoing a plus Doppler shift where the power is increased. In this case, a variation range of the maximum Doppler shift requiring compensation is a variation from -f_{D} to +f_{D}, which is double as compared to a case of uni-directional RRH.

Here, a scheme 0 to a scheme 2 (HST scheme 0 to HST scheme 2) as schemes for HST below are compared.

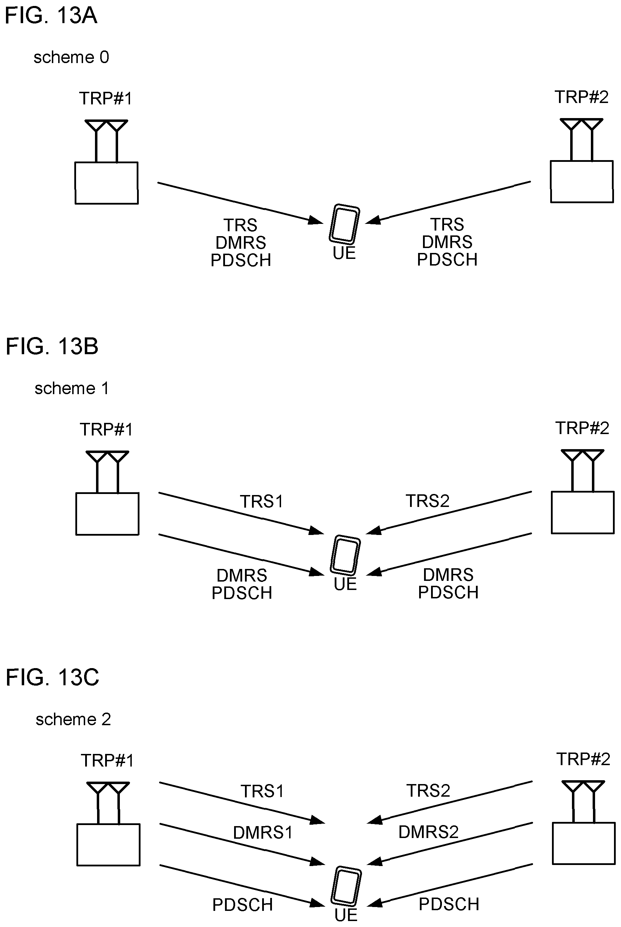

In the scheme 0 of FIG. 13A, a tracking reference signal (TRS), a DMRS, and a PDSCH common to two TRPs (RRHs) are transmitted (at the same time point and using the same frequency resource) (normal SFN, transparent SFN, HST-SFN).

In the scheme 0, since the UE receives a DL channel/signal at a single TRP equivalent, there is one TCI state of PDSCH.

Note that in Rel. 16, an RRC parameter is defined to distinguish transmission utilizing a single TRP from transmission utilizing an SFN. The UE, in a case of reporting the corresponding UE capability information, may distinguish reception of a DL channel/signal of the single TRP from reception of a PDSCH assuming the SFN, based on the RRC parameter. On the other hand, the UE may transmit/receive using the SFN assuming the single TRP.

In the scheme 1 of FIG. 13B, a TRS is transmitted dedicated to the TRP (using time/frequency resources different depending on the TRP). In this example, a TRS 1 is transmitted from TRP #1, and a TRS 2 is transmitted from TRP #2.

In the scheme 1, since the UE receives DL channels/signals from respective TRPs using respective TRSs from respective TRPs, there are two TCI states of PDSCH.

Note that in the present disclosure, the scheme 1 of the SFN (SFN scheme 1) may be referred to as an SFN scheme A or a scheme A. In the scheme A, Doppler compensation may be performed in the UE.

In the scheme 2 of FIG. 13C, a TRS and a DMRS are transmitted dedicated to the TRP. In this example, the TRS 1 and DMRS 1 are transmitted from TRP #1, and TRS 2 and the DMRS 2 are transmitted from TRP #2. The schemes 1 and 2 can suppress rapid change in the Doppler shift and appropriately estimate/ensure the Doppler shift as compared to the scheme 0. Since the DMRS in the scheme 2 increases more than the DMRS in the scheme 1, a maximum throughput in the scheme 2 is lower than that in the scheme 1.

In the scheme 0, the UE switches the single TRP and the SFN based on the higher layer signaling (RRC information element/MAC CE).

The UE may switch the scheme 1/scheme 2/NW pre-compensation scheme based on the higher layer signaling (RRC information element/MAC CE).

In the scheme 1, two TRS resources are configured for the travel direction of the HST and a direction opposite thereto, respectively.

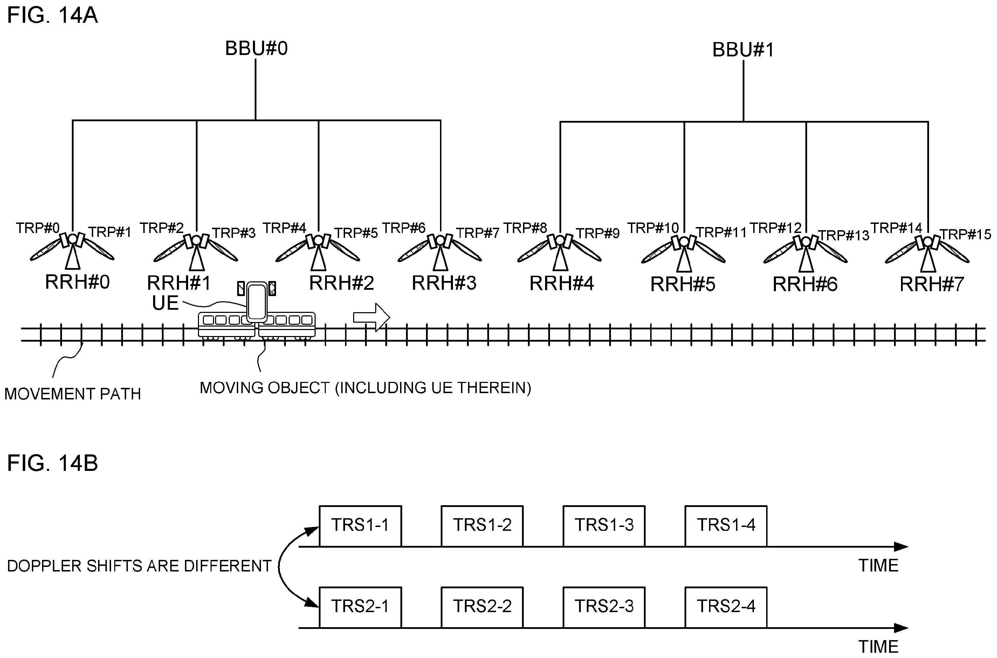

In an example of FIG. 14A, the TRP (TRPs #0, #2, ...) transmitting the DL signal toward the direction opposite to that of the HST transmits a first TRS (a TRS coming from ahead of the HST) in the same time and frequency resources (SFN). The TRP (TRPs #1, #3, ...) transmitting the DL signal toward the travel direction of the HST transmits a second TRS (a TRS coming from behind the HST) in the same time and frequency resources (SFN). The first TRS and the second TRS may be transmitted/received using the frequency resources different from each other.

In an example of FIG. 14B, TRSs 1-1 to 1-4 are transmitted as the first TRSs, and TRSs 2-1 to 2-4 are transmitted as the second TRSs.

In consideration of beam management, 64 beams and 64 time resources are used to transmit the first TRSs, and 64 beams and 64 time resources are used to transmit the second TRSs. The beam of the first TRS and the beam of the second TRS are considered to be equal (in the QCL type D RS) to each other. By multiplexing the first TRS and the second TRS on the same time resource and different frequency resources, resource utilization efficiency can be improved.

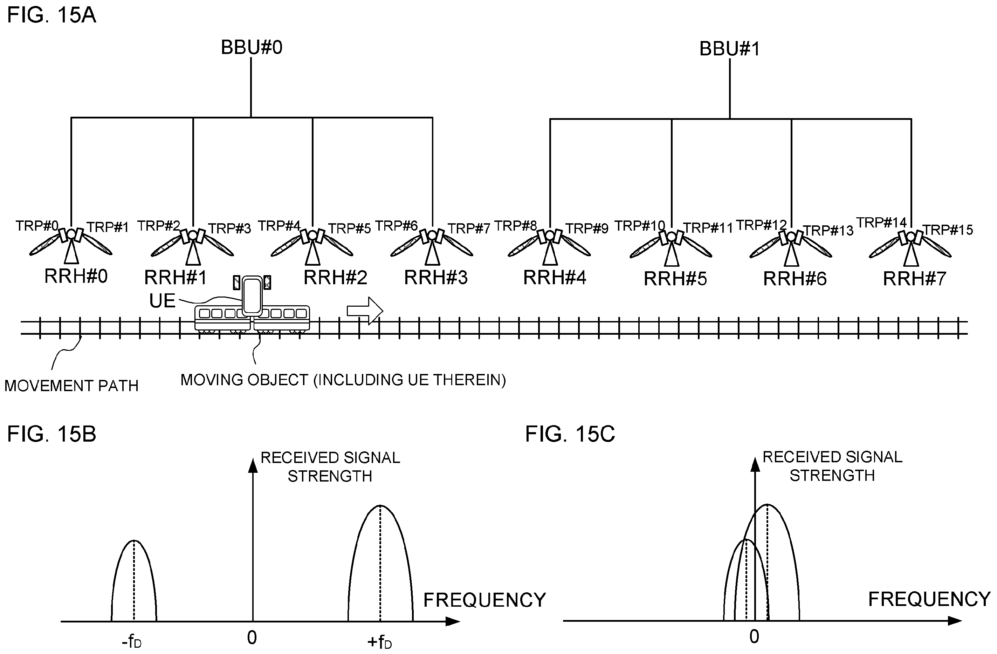

In an example of FIG. 15A, RRHs #0 to #7 are located along the moving route of the HST. RRHs #0 to #3 are connected to base band unit (BBU) #0, and RRHs #4 to #7 are connected to BBU #1. Each RRH is a bi-directional RRH, and forms a beam toward both the travel direction of the moving route and a direction opposite thereto, using each transmission/reception point (TRP).

For a received signal in an example of FIG. 15B (single TRP (SFN)/scheme 1), in a case where the UE receives a signal/channel (a beam in the travel direction of the HST, a beam from behind the UE) transmitted from TRP #2n-1 (n is an integer equal to or greater than 0), the minus Doppler shift (-f_{D} in this example) occurs. In a case where the UE receives a signal/channel (a beam in a direction opposite to the travel direction of the HST, a beam from ahead of the UE) transmitted from TRP #2n (n is an integer equal to or greater than 0), the plus Doppler shift (+f_{D} in this example) occurs.

In Rel. 17 and later versions, a study is underway to perform Doppler shift compensation (which may also be referred to as pre-Doppler Compensation, network (NW) pre-compensation scheme (HST NW pre-compensation scheme, TRP based pre-compensation scheme)) in transmission of a downlink (DL) signal/channel from the TRP to the UE in the HST. The TRP, by performing the Doppler compensation in advance when transmitting a DL signal/channel to the UE, can decrease the influence of the Doppler shift at the time of reception of the DL signal/channel in the UE.

In the present disclosure, the NW pre-compensation scheme may be a combination of the scheme 1 and the pre-compensation of the Doppler shift by base station. In the present disclosure, the NW pre-compensation and the TRP based pre-compensation scheme may be referred to as a SFN scheme B, a scheme B or the like. In the scheme B, Doppler pre-compensation may be performed in the base station.

In the NW pre-compensation scheme, the TRP forming a beam toward the travel direction of the moving route and the TRP forming a beam toward a direction opposite to the travel direction of the moving route perform the Doppler compensation, and then, transmit a DL signal/channel to the UE in the HST. In this example, TRP #2n-1 performs the plus Doppler compensation and TRP #2n performs the minus Doppler compensation to decrease the influence of the Doppler shift at the time of reception of the signal/channel in the UE (FIG. 15C).

Note that in the situation of FIG. 15C, since the UE receives the DL channels/signals from respective TRPs using respective TRSs from respective TRPs, there may be two TCI states of PDSCH.

### (Application of Artificial Intelligence (AI) technology to Radio Communication)

For future radio communication technologies, it is studied to utilize the AI technology such as machine learning (ML) for control, management, and the like of networks/devices.

For example, it is studied that the terminal (user terminal, User Equipment (UE)/base station (BS)) utilizes the AI technology for improvement in the channel state information (CSI) feedback (e.g., overhead reduction, accuracy improvement, prediction), improvement in the beam management (e.g., accuracy improvement, prediction in time/spatial domain), improvement in positioning (e.g., position estimation/prediction improvement), and the like.

An AI model may output at least one piece of information among an estimated value, a predicted value, a selected operation, classification, and the like, based on the input information. In the present disclosure, the UE/BS may input channel state information, a reference signal measurement value, and the like to the AI model and output highly accurate channel state information/measured value/beam selection/position, future channel state information/radio link quality, and the like.

Note that, in the present disclosure, AI may be interpreted as an object (also referred to as a target, data, function, program, and the like) having (implementing) at least one of the following features:
- estimation based on observed or collected information,
- selection based on observed or collected information, and
- prediction based on observed or collected information.

In the present disclosure, "estimation," "prediction," and "inference" may be interchangeably interpreted. In the present disclosure, "estimate," "predict," and "infer" may be interchangeably interpreted.

In the present disclosure, an object may be, for example, an apparatus, a device, or the like such as the UE, the BS, or the like. In the present disclosure, the object may correspond to a program/model/entity operating in the apparatus.

Note that, in the present disclosure, the AI model may be interpreted as an object having (implementing) at least one of the following features:
- feeding information to thereby generate an estimated value,
- feeding information to thereby predict an estimated value,
- feeding information to thereby find a feature, and
- feeding information to thereby select an operation.

In the present disclosure, the AI model may mean a data driven algorithm that applies the AI technology and generates an output set based on an input set.

In the present disclosure, "AI model," "model," "ML model," "predictive analytics," "prediction analytic model," "tool," "autoencoder," "encoder," "decoder," "neural network model," "AI algorithm," "scheme," and the like may be interchangeably interpreted. The AI model may be derived by using at least one of regression analysis (for example, linear regression analysis, multiple regression analysis, logistic regression analysis), support vector machine, random forest, neural network, deep learning, and the like.

In the present disclosure, examples of training method of the AI model may include supervised learning, unsupervised learning, reinforcement learning, and federated learning. The supervised learning may mean processing of training a model from an input and corresponding label. The unsupervised learning may mean processing of training a model without labeled data. The reinforcement learning may mean processing of training a model from an input (in other words, state) and a feedback signal (in other words, reward) generated from an output of the model (in other words, action) in an environment where the model interacts.

In the present disclosure, "generation," "calculation," "derivation," and the like may be interchangeably interpreted. In the present disclosure, "perform," "manage," "operate," "carry out," and the like may be interchangeably interpreted. In the present disclosure, "training," "learning," "update," "retraining," and the like may be interchangeably interpreted. In the present disclosure, "inference," "after-training," "substantial use," "actual use," and the like may be interchangeably interpreted. In the present disclosure, signal and signal/channel may be interchangeably interpreted.

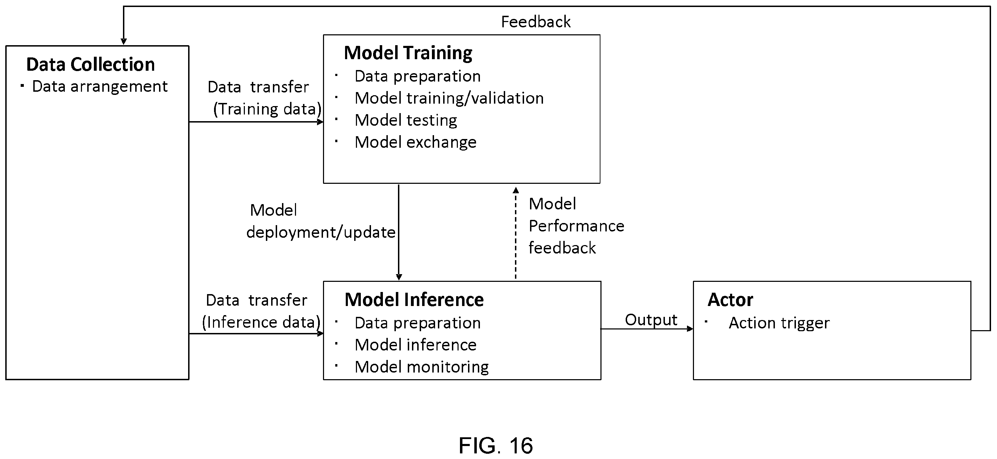

FIG. 16 is a diagram to show an example of a framework for an AI model management. In this example, respective stages related to the AI model are illustrated in blocks. This example is also expressed as a life cycle management (LCM) of an AI model.

A data collection stage corresponds to a stage of collecting data for AI model generation/update. The data collection stage may include data organization (e.g., deciding which data is transferred for model training/model inference), data transfer (e.g., transferring data to an entity (e.g., UE, gNB) performing model training/model inference), and the like.

Note that the data collection may mean processing of collecting data by a network node, a management entity, or the UE for the purpose of the AI model training/data analytics/inference. In the present disclosure, processing and procedure may be interchangeably interpreted. In the present disclosure, collection may mean acquiring a data set (which can be used as input/output, for example) for the AI model training/inference based on the measurement (such as channel measurement, beam measurement, radio link quality measurement, or position estimation).

In the present disclosure, offline field data may be data collected from a field (real world) and used for AI model offline training. In the present disclosure, the online field data may be data collected from a field (real world) and used for AI model online training.

In a model training stage, model training is performed based on the data transferred from the collection stage (training data). This stage may include data preparation (e.g., performing data pre-processing, cleaning, formatting, conversion, or the like), model training/validation, model testing (e.g., confirming whether a trained model satisfies a performance threshold), model exchange (e.g., transferring a model for distributed learning), model deployment/update (deploying/updating a model to an entity performing the model inference), and the like.

Note that the AI model training may mean processing for training an AI model by a data driven method and obtaining a trained AI model for inference.

The AI model validation may mean sub-processing of training for evaluating the AI model quality using a data set different from the data set used for the model training set. The sub-processing serves for selecting a model parameter that is generalized beyond the data set used for the model training.

The AI model testing may mean sub-processing of training for evaluating a final AI model performance using a data set different from the data set used for the model training/validation. Note that the testing may not assume model turning after that, unlike the validation.

In a model inference stage, model inference is performed based on the data transferred from the collection stage (inference data). This stage may include data preparation ((e.g., performing data pre-processing, cleaning, formatting, conversion, or the like), model inference, model monitoring (e.g., monitoring a model inference performance), model performance feedback (feeding back the model performance to an entity performing the model training), output (providing an output of the model to an actor) and the like.

Note that the AI model inference may mean processing for generating the output set from the input set using the trained AI model.

A UE side model may mean an AI model in which the inference is completely performed in the UE. A network side model may mean an AI model in which the inference is completely performed in the network (e.g., gNB).

A one-sided model may mean the UE side model or the network side model. A two-sided model may mean a pair of AI models in which joint inference is performed. Here, the joint inference may include an AI inference in which the inference is jointly performed over the UE and the network, and for example, a first portion of the inference may be first performed by the UE and the rest portion may be performed by the gNB (and vice versa).

AI model monitoring may mean processing for monitoring an AI model inference performance, and may be interchangeably interpreted as model performance monitoring, performance monitoring and the like.

Note that model registration may mean making a model executable (register a model) through giving a version identifier to the model and compiling into specific hardware utilized in the inference stage. The model deployment may mean delivering a runtime image (or execution environment image) of model that has been completely developed and tested to a target (e.g., UE/gNB) in which inference is to be performed (or enabling the relevant image in the target).

An actor stage may include an action trigger (e.g., deciding whether to trigger an action to other entities), feedback (e.g., feeding back information required for training data/inference data/performance feedback), and the like.

Note that, for example, model training for mobility optimization may be performed in, for example, maintenance operation management in the network (NW) (Operation, Administration and Maintenance (Management)(OAM)/gNodeB (gNB)). In the former case, interoperation, large capacity storage, operator manageability, model flexibility (such as feature engineering), and the like are advantageous. In the latter case, unnecessity of data exchange due to model update latency and model deployment, and the like are advantageous. The model inference described above may be performed, for example, in the gNB.

Note that model activation may mean enabling an AI model for a specific function. Model activation may mean disabling an AI model for a specific function. The model switching may mean deactivating a currently active AI model for a specific function, and activating a different AI model.

The model transfer may mean delivering an AI model on an air interface. This delivering may include delivering one or both of a parameter for a model structure known on the receiving side and a new model having the parameter. This delivering may include a full model or a partial model. Model download may mean model transfer from the network to the UE. Model upload may mean model transfer from the UE to the network.

### (Analysis)

In the existing system, Doppler measurement is performed using a periodic DL RS. For example, a cell-specific reference signal (CRS) is used in LTE, and a TRS is used in NR (up to Rel. 16).

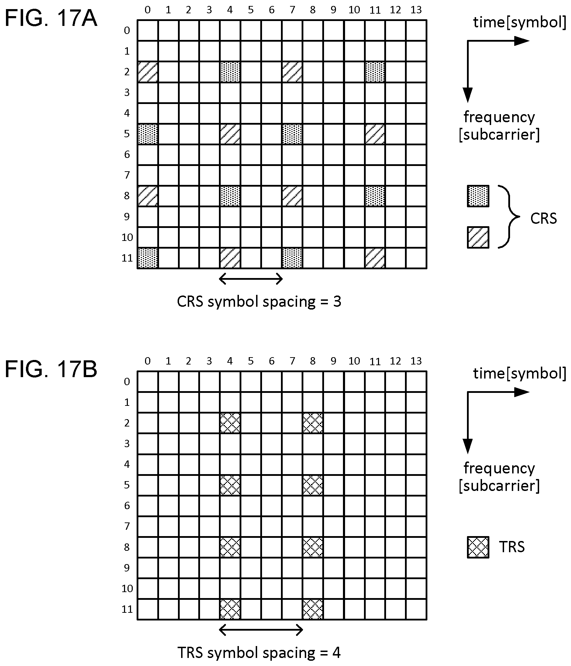

FIG. 17A is a diagram to show an example of a CRS arrangement in an LTE system. As shown in FIG. 17A, CRS symbol spacing has 3 symbols (0.214 ms), and in this case, Doppler shift measurement of up to 972 Hz can be made.

FIG. 17B is a diagram to show an example of a TRS arrangement in an NR system. As shown in FIG. 17B, TRS symbol spacing has 4 symbols (0.286 ms), and in this case, Doppler shift measurement of up to 870 Hz can be made.

As described above, in the measurable maximum Doppler shift in the NR system, a high frequency band (e.g., a band of not less than 2.1 GHz in an FDD band, a band of not less than 4.5 GHz in a TDD band) cannot be supported in an environment of high speed moving (e.g., moving at a speed exceeding 500 km/h).

On the other hand, in the future radio communication systems (e.g., in Rel. 20 and later versions), a higher frequency than a frequency in the existing systems may be utilized, and therefore, it is desirable to support definitions that can tolerate in the high speed mobility environment in any band to ensure flexibility of a band available to each operator.

However, a study of such definitions is insufficient. To be more specific, a study is insufficient of a method for appropriately measuring/predicting the Doppler shift (e.g., DL RS structure (e.g., a symbol spacing/symbol position of an RS), Doppler estimation using the UE/NW side AI/ML model) even when a high frequency band than the existing systems is utilized under the high speed mobility environment.

In a case of the insufficient study of these, the reception processing of the signal cannot be appropriately performed in the UE/NW, and the communication throughput improvement may be possibly suppressed.

Then, the inventors of the present invention came up with the idea of a method for solving these problems.

Embodiments according to the present disclosure will be described in detail with reference to the drawings as follows. The radio communication methods according to respective embodiments may each be employed individually, or may be employed in combination.

### (Various Interpretations)

In the present disclosure, a phrase bracketed by "()" in a sentence may indicate an explanation (e.g., explanation of spelling), a paraphrase, a specific example, a supplementary explanation, or the like of a phrase immediately before the phrase bracketed by "()". In the present disclosure, a phrase bracketed by "[]" in a sentence may be interpreted as meaning of the entire sentence including the phrase, or as meaning of the entire sentence without including (with ignoring) the phrase. Note that "()" or "[]" may be used for usage/meaning other than these.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, "synchronization signal," "SSB," "SS/PBCH block," and the like may be interchangeably interpreted.

In the present disclosure, "single TRP" and "SFN" may be interchangeably interpreted. In the present disclosure, "HST," "HST scheme," "high speed mobility scheme," "scheme 1,"scheme 2," "NW pre-compensation scheme," "HST scheme 1," "HST scheme 2," and "HST NW pre-compensation scheme" may be interchangeably interpreted.

In the present disclosure, a PDSCH/PDCCH utilizing a single TRP may be interchangeably interpreted as a PDSCH/PDCCH based on a single TRP, a single TRP PDSCH/PDCCH, a non-SFN PDSCH/PDCCH. In the present disclosure, a PDSCH/PDCCH utilizing an SFN may be interchangeably interpreted as a PDSCH/PDCCH utilizing an SFN in multi, a PDSCH/PDCCH a based on an SFN, and an SFN PDSCH/PDCCH.

In the present disclosure, receiving of a DL signal (PDSCH/PDCCH) utilizing an SFN may mean receiving using the same time/frequency resource and/or receiving the same data (PDSCH)/control information (PDCCH) from a plurality of transmission/reception points. Receiving of a DL signal using an SFN may mean using the same time/frequency resource and/or receiving the same data/control information utilizing a plurality of TCI states/spatial domain filter/beam/QCL.

In the present disclosure, HST-SFN scheme, SFN scheme in Rel. 17 or later versions, new SFN scheme, new HST-SFN scheme, HST-SFN scenario in Rel. 17 or later versions, HST-SFN scheme for HST-SFN scenario, SFN scheme for HST-SFN scenario, scheme 1, Doppler pre-compensation scheme, and at least one of scheme 1 (HST scheme 1) and Doppler pre-compensation scheme may be interchangeably interpreted. In the present disclosure, Doppler pre-compensation scheme, base station pre-compensation scheme, TRP pre-compensation scheme, pre-Doppler compensation scheme, Doppler pre-compensation scheme, NW pre-compensation scheme, HST NW pre-compensation scheme, TRP pre-compensation scheme, and TRP-based pre-compensation scheme may be interchangeably interpreted. In the present disclosure, pre-compensation scheme, reduction scheme, improvement scheme, and compensation scheme may be interchangeably interpreted.

### (Radio Communication Method)

In the present disclosure, "TRS," "DL RS," "UL RS" and "CRS" may be interchangeably interpreted. In each embodiment of the present disclosure, a TRS (particularly, NZP CSI-RS) is described as an example, but an RS used for application of each embodiment is not limited to a TRS/NZP CSI-RS.

In the present disclosure, "HST," "high mobility", "high speed mobility," "second mobility," "TRS for HST," and "TRS for high mobility" may be interchangeably interpreted. In the present disclosure, "normal mobility," "mobility other than high mobility," "first mobility," "normal TRS," and "TRS of normal mobility" may be interchangeably interpreted.

RRC parameter/information element names and MAC CE/DCI field names in the present disclosure are merely examples, and not limited to the illustrated examples.

Note that each embodiment of the present disclosure is applicable without limitation to the cell-free structure/HST. In other words, each embodiment of the present disclosure is also applicable to a case where the cell-free structure/HST is not employed.

### <First Embodiment>

A first embodiment relates to a TRS configuration.

The first embodiment is broadly classified into Embodiments 1-1 to 1-4. The UE/NW may apply any of Embodiments 1-1 to 1-4 alone, or a combination of at least two of Embodiments 1-1 to 1-4.

The UE/NW may use at least one of modes respectively corresponding to Embodiments 1-1 to 1-4.

### <<Embodiment 1-1>>

The UE may receive a configuration for TRS by way of higher layer signaling (e.g., SIB/RRC signaling).

The UE may perform Doppler shift measurement using a TRS based on the configuration.

### <<<Option 1-1-1>>>

The configuration for TRS may be, for example, a configuration for non-zero power (NZP) CSI-RS resource set/resource (e.g., NZP-CSI-RS-ResourceSet).

The configuration for TRS may include, for example, a configuration of a TRS symbol spacing/the number of symbols in a slot different from a configuration of a TRS symbol spacing (e.g., 4)/the number of symbols in a slot (e.g., 2) in the existing NR.

For example, the symbol spacing included in the configuration for TRS may be smaller than the existing TRS symbol spacing (e.g., the symbol spacing may be 3 or less).

For example, the number of symbols included in the configuration for TRS may be equal to or greater than the number of existing TRS symbols (e.g., the number of symbols may be 2 or more).

For example, the configuration for TRS can configure different periodic NZP CSI-RS resources (e.g., a CSI-RS resource other than a single port CSI-RS resource having a density of 3 in a frequency direction) of the TRS configuration in the existing NR.

For example, the configuration for TRS can configure a new periodic NZP CSI-RS resource.

For example, in the configuration for TRS, the number of configurations of the periodic NZP CSI-RS resource configurable per slot may be greater than the existing number (e.g., 2). The configuration of the periodic NZP CSI-RS resource may include the configuration of the TRS symbol spacing/the number of symbols in a slot.

For example, the configuration for TRS may include a parameter indicating usage for a TRS for HST (e.g., trs-Info-HighMobility).

### <<<Option 1-1-2>>>

The configuration for TRS may be, for example, a new RRC parameter (e.g., TRS-ResourceSetforhighmobility).

In other words, the configuration for TRS may be a configuration different from the configuration for the existing NZP CSI-RS.

The configuration for TRS may have the same structure as the configuration for the existing NZP CSI-RS.

The configuration for TRS may include, for example, a configuration of a TRS symbol spacing (e.g., 4) /a symbol spacing different from the number of symbols in a slot (e.g., 2)/the number of symbols in the existing NR.

For example, the symbol spacing included in the configuration for TRS may be smaller than the existing TRS symbol spacing (e.g., the symbol spacing may be 3 or less).

For example, the number of symbols included in the configuration for TRS may be equal to or greater than the number of existing TRS symbols (e.g., the number of symbols may be 2 or more).

For example, the configuration for TRS can configure different periodic NZP CSI-RS resources (e.g., a CSI-RS resource other than a single port CSI-RS resource having a density of 3 in a frequency direction) of the TRS configuration in the existing NR.

For example, the configuration for TRS can configure a new periodic NZP CSI-RS resource.

For example, in the configuration for TRS, the number of configurations of the periodic NZP CSI-RS resource configurable per slot may be greater than the existing number (e.g., 2). The configuration of the periodic NZP CSI-RS resource may include the configuration of the TRS symbol spacing/the number of symbols in a slot.

For example, the configuration for TRS may include a parameter indicating usage for a TRS for HST (e.g., trs-Info-HighMobility).

For example, the configuration for TRS may be included in a configuration for TRS resource set (e.g., TRS-ResourceSet/TRS-ResourceSet-r17).

### <<<Option 1-1-3>>>

A configuration for a first TRS (e.g., the existing TRS configuration) and a configuration for a second TRS (e.g., TRS configuration for HST) may be defined.

The UE may be notified of which one of the configuration for the first TRS and the configuration for the second TRS is configured, by way of higher layer signaling (e.g., information of the specific number of bits (e.g., 1 bit) included in the RRC/SIB).

For example, in a case where the UE determines to be configured with the configuration for the first TRS, the UE may determine to use a structure of the first TRS (e.g., the structure of the existing TRS (e.g., a TRS having the symbol spacing of 4)). For example, in a case where the UE determines to be configured with the configuration for the second TRS, the UE may determine to use a structure of the second TRS (e.g., the structure of the TRS for HST (e.g., a TRS having the symbol spacing of 3)).

For example, in a case of notifying (e.g., a plurality of UEs in the cell) of which one of the configuration for the first TRS and the configuration for the second TRS is configured using an SIB, the same resource or different resources may be configured for a TRS for the structure of the first TRS and a TRS for the structure of the second TRS.

For example, in a case of notifying (e.g., the UE individual) of which one of the configuration for the first TRS and the configuration for the second TRS is configured using RRC, different resources may be configured for a TRS for the structure of the first TRS and a TRS for the structure of the second TRS.

In this case, for example, the resource for the TRS for the structure of the first TRS and the resource for the TRS for the structure of the second TRS may undergo time division multiplexing (TDM)/frequency division multiplexing (FDM)/spatial division multiplexing (SDM).

In this case, for example, the resource for the TRS for the structure of the first TRS and the resource for the TRS for the structure of the second TRS may overlap each other in at least a part of the resources (e.g., symbol).

In this case, for example, a parameter indicating switching between the existing (normal) TRS and the TRS for HST may be defined/configured per CSI-RS resource set/resource.

In this case, for example, the UE may assume/determine that a specific (e.g., the first) CSI-RS resource set/resource is configured for the normal TRS, and another (e.g., the second) CSI-RS resource set/resource is configured for the TRS for HST.

### <<<Variation>>>

In the first embodiment, the periodic NZP CSI-RS for the TRS for HST may be configured with a period different from the existing configuration (for example, shorter as compared to the existing configuration) (e.g., a period smaller than 10 ms).

In the first embodiment, TRS mapping may be configured using a parameter for CSI-RS resource mapping (e.g., CSI-RS-resourceMapping), or a new parameter. For example, the UE may determine a TRS mapping position (e.g., symbol number l = 4/7/8) using a parameter indicating a symbol position where a TRS is mapped.

In the first embodiment, the UE may assume/determine that an antenna port corresponds to a different port index for the configured periodic NZP CSI-RS.

Note that in the present disclosure, "periodic NZP CSI-RS," "aperiodic NZP CSI-RS," and "semi-persistent NZP CSI-RS" may be interchangeably interpreted.

The configuration in the first embodiment may be a UE-specific configuration or a cell-specific configuration.

The RRC configuration in the first embodiment may be configured per serving cell/area (the second cell in the cell-free)/TRP, or per at least one of non-serving cell/area/TRP and candidate cell/area/TRP.

At least one item/feature described in the present variation may be configured using a higher layer parameter, predefined in the specifications, decided based on the reported UE capability information, or decided based on the combination thereof.

According to Embodiment 1-1, the TRS for HST can be appropriately configured.

### <<Embodiment 1-2>>

The UE may receive an indication for TRS by way of the MAC CE/DCI.

The UE may perform Doppler shift measurement using a TRS based on the indication.

### <<<Option 1-2-1>>>

For example, the UE may be indicated with a TRS resource set by way of the MAC CE/DCI.

For example, the UE may be indicated with one or a plurality of resource set IDs using a codepoint included in the MAC CE/DCI.

For example, the UE may be indicated with one or a plurality of resource set IDs using a bitmap included in the MAC CE/DCI.

### <<<Option 1-2-2>>>

For example, the UE may be indicated with a TRS symbol spacing/the number of symbols (the number of symbols in a slot) by way of the MAC CE/DCI.

For example, the UE may be indicated with only a TRS symbol spacing by way of the MAC CE/DCI, indicated with only the number of TRS symbols, indicated with a TRS symbol spacing and the number of symbols, or indicated with a combination of a symbol spacing and the number of symbols configured in advance using RRC (or predefined in the specifications) using the ID.

### <<<Option 1-2-3>>>

For example, the UE may be indicated with a TRS symbol position (a symbol position in a slot) by way of the MAC CE/DCI.

For example, a symbol number indicating the TRS symbol position may be indicated in a codepoint or a bitmap, or indicated with a combination of symbol positions configured in advance using RRC (or predefined in the specifications) by using an ID.

### <<<Option 1-2-4>>>

For example, the UE may be notified of transmission of a TRS for HST by way of the MAC CE/DCI.

In this option, the UE may be configured with one (or at least one) TRS for HST using an RRC configuration.

For example, the UE may be notified of either transmission of a normal (normal mobility) TRS or transmission of a TRS for HST using a field included in the MAC CE/DCI (e.g., 1-bit field).

For example, when the field indicates a first value (e.g., 0), the UE may assume that a normal TRS is transmitted, and when the field indicates a second value (e.g., 1), the UE may assume that a TRS for HST is transmitted.

### <<<Option 1-2-5>>>

For example, in a case where the UE is notified of a specific notification by way of the MAC CE/DCI, the UE may determine that a TRS for HST is transmitted.

The specific notification may be, for example, a notification related to a TCI state. For example, the UE, in a case of receiving a notification indicating a plurality of (e.g., two) TCI states, may determine that a TRS for HST is transmitted.

### <<<Variation>>>

The (maximum) number of TRS candidates configurable for the UE by way of the RRC and the (maximum) number of TRS candidates capable of being indicated to the UE by way of the MAC CE/DCI may be configured by way of higher layer signaling, predefined in the specifications, decided based on the reported UE capability information, or decided based on the combination thereof.

The UE may determine/assume that a HST (TRS for HST)/normal mobility (normal mobility TRS) is applied after a specific period (e.g., X symbols/slot/ms) elapses from receiving/transmitting the notification utilizing the MAC CE/DCI.

The switching between the HST (TRS for HST) and the normal mobility (normal mobility TRS) may be notified by way of [new] MAC CE/DCI.

The switching between the HST (TRS for HST) and the normal mobility (normal mobility TRS) may be performed when a specific timer predefined/configured expires.

The switching between the HST (TRS for HST) and the normal mobility (normal mobility TRS) may be performed when the number of slots/the number of TRSs applying a TRS for HST/normal TRS are configured, and a specific counter reaches a specific value.

The UE may transmit a request for the switching between the HST (TRS for HST) and the normal mobility (normal mobility TRS) to the NW.

The above-described X, specific timer, and specific counter may be predefined in the specifications, configured for the UE by way of higher layer signaling, decided based on the UE capability information, or decided based on a combination thereof.

In a case where the above-described specific timer/counter is applied, in a case where the UE receives a HST (TRS for HST) MAC CE/DCI, the UE may reset/restart a specific timer/counter.

In a case where the above-described specific timer/counter is applied, in a case where the UE receives the MAC CE/DCI for a normal mobility (normal mobility TRS), the UE may determine/assume that a specific timer/counter expires/stops.

The indication by way of the MAC CE/DCI in the first embodiment may be indicated per serving cell/area (the second cell in the cell-free)/TRP, or per at least one of non-serving cell/area/TRP and candidate cell/area/TRP.

According to Embodiment 1-2, the TRS for HST can be appropriately indicated.

### <<Embodiment 1-3>>

The UE may be configured with a plurality of types of TRSs (e.g., NZP CSI-RS).

A plurality of TRS types may be, for example, at least two of periodic, aperiodic, and semi-persistent types. The TRS type in the present embodiment may be interpreted as an arbitrary type.

A structure of a first (e.g., periodic) NZP CSI-RS may be the same as the structure of the existing periodic NZP CSI-RS.

The UE may receive a TRS based on the structure of the first NZP CSI-RS and a TRS based on a structure of a second (e.g., aperiodic/semi-persistent) NZP CSI-RS.

According to such a structure of the present embodiment, the TRS symbols capable of being transmitted per slot can be increased as compared to the existing TRS.

The number of TRS symbols capable of being transmitted per slot may be configured by way of higher layer signaling, predefined in the specifications, decided based on the UE capability information, or decided based on a combination thereof.

For example, the UE may be configured with the number of second (e.g., aperiodic/semi-persistent) NZP CSI-RSs.

The number of TRS symbols capable of being transmitted per slot may be configured per TRP/per cell/per area.

For example, the UE may be notified of a configuration for one or a plurality of second (e.g., aperiodic/semi-persistent) NZP CSI-RSs by way of RRC signaling.

The second NZP CSI-RS may be the same as or different from the first NZP CSI-RS.

The configuration for a NZP CSI-RS may apply, for example, at least one of those described in Embodiment 1-1 above.

For example, the UE may be indicated with which of the second NZP CSI-RS is triggered by way of the MAC CE/DCI.

The indication by way of the MAC CE/DCI may apply, for example, at least one (e.g., Option 1-2-1/1-2-3/1-2-4/1-2-5) described in Embodiment 1-2 above.

The method described in Embodiment 1-2 above may be applied to at least one of the number of second NZP CSI-RSs capable of being indicated, a time until applying the indication, switching of the TRS/mobility, and notification target (e.g., serving cell/area/TRP, non-serving cell/area/TRP, candidate cell/area/TRP).

In at least one of a case where a specific condition is satisfied, a case where a specific higher layer parameter is configured, and a case where a specific UE capability information is reported, the UE may assume/determine that phases of a first NZP CSI-RS resource and a second NZP CSI-RS resource are continuous. By defining like this, the Doppler shift can be appropriately measured even utilizing a plurality of types of NZP CSI-RSs.

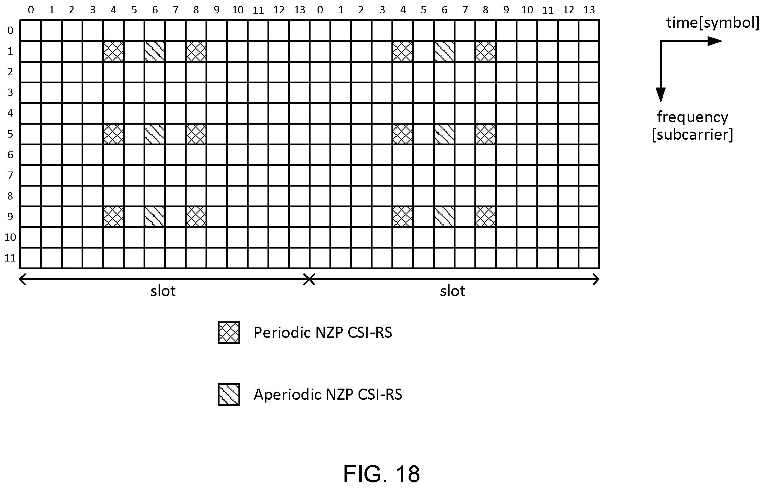

FIG. 18 is a diagram to show an example of a TRS arrangement according to Embodiment 1-3. In the example shown in FIG. 18, the UE is configured/indicated with a periodic NZP CSI-RS and an aperiodic NZP CSI-RS. The periodic NZP CSI-RS and the aperiodic NZP CSI-RS are used to perform the Doppler shift measurement.

According to Embodiment 1-3, by utilizing the existing TRS more than one time, a structure of a TRS adaptable to the high frequency band can be realized.

### <<Embodiment 1-4>>

The UE may request the NW to transmit a TRS for HST.

For example, in a case where a specific event is met, the UE may transmit a request for TRS for HST transmission.

The specific event may be configured by way of higher layer signaling, predefined in the specifications, decided based on the UE capability information, or decided based on a combination thereof.

For example, a new event for deciding/determining a HST may be configured/defined for the specific event.

For example, the existing (up to Rel. 18) event may be reused for the specific event.

For example, the UE may transmit the request for TRS for HST transmission based on the UE implementation.

The UE may determine/assume that a HST (TRS for HST)/normal mobility (normal mobility TRS) is applied after a specific period (e.g., X symbols/slot/ms) elapses from the event occurring/the request transmission.

The switching between the HST (TRS for HST) and the normal mobility (normal mobility TRS) may be notified by way of [new] MAC CE/DCI.

The switching between the HST (TRS for HST) and the normal mobility (normal mobility TRS) may be performed when a specific timer predefined/configured expires.

The switching between the HST (TRS for HST) and the normal mobility (normal mobility TRS) may be performed when the number of slots/the number of TRSs applying a TRS for HST/normal TRS are configured, and a specific counter reaches a specific value.

The UE may transmit a request for the switching between the HST (TRS for HST) and the normal mobility (normal mobility TRS) to the NW.

The above-described X, specific timer, and specific counter may be predefined in the specifications, configured for the UE by way of higher layer signaling, decided based on the UE capability information, or decided based on a combination thereof.

In a case where the above-described specific timer/counter are applied, in a case where the UE receives a HST (TRS for HST) MAC CE/DCI, the UE may reset/restart a specific timer/counter.

In a case where the above-described specific timer/counter is applied, in a case where the UE receives the MAC CE/DCI for a normal mobility (normal mobility TRS), the UE may determine/assume that a specific timer/counter expires/stops.

The request transmitted from the UE may be transmitted utilizing a specific UL channel/signal (e.g., PUCCH/PUSCH/PRACH/SRS/other UL signals).

For example, the UE may transmit the request using a scheduling request (SR). An SR configuration/SR resource for the request may be configured/defined for the SR.

For example, in a case where the SR configuration/SR resource for the request is not configured, the UE may utilize a normal SR configuration/SR resource.

For example, the UE may transmit the request by way of the MAC CE. The UE, in a case of receiving a UL grant (e.g., when a PUSCH [vacant] resource is present), may transmit the MAC CE on the PUSCH. The UE may transmit an SR to request the UL grant.

For example, the UE may transmit the request by way of the UCI.

In this case, for example, the UE may use a resource allocated in the periodic/semi-persistent CSI report.

A bit for identifying a usage may be defined in the UCI to identify a CSI report, or a specific bit (bit length) in the UCI may be used for the purpose of usage identification.

The request the UE transmits may include at least one of a bit for requesting the HST/high mobility (e.g., 1 bit) and the TRP/cell/area number/ID applied.

According to Embodiment 1-4, a configuration/indication of a HST and a TRS for HST can be appropriately requested.

As described above, according to the first embodiment, by utilizing the TRS for HST, the Doppler shift measurement can be appropriately performed even utilizing the high frequency band.

### <Second Embodiment>

A second embodiment relates to the Doppler estimation.

The UE/NW may perform the Doppler shift prediction/estimation using a UE side/NW side AI/ML model.

The UE/NW may apply the Doppler compensation based on the predicted/estimated Doppler shift to transmit/receive a signal.

Input information to a UE side /NW side AI/ML model may include, for example, information related to at least one of the following items.
- Moving speed/acceleration rate of the UE.
- Location of the UE.
- Frequency.
- Subcarrier spacing.
- Phase [result] of RS (e.g., DL/UL RS) used for estimation.
- Past (historical) Doppler shift.
- Moving speed/acceleration rate of the TRP.
- Location of the TRP.
- Mobility history.
- Mobility route.

Output information from the UE side/NW side AI/ML model may include, for example, information related to at least one of the following items.
- Doppler shift prediction.
- Phase difference [that cannot be measured in a case where 360° is exceeded].

For example, the NW side information used as the input information to the UE side AI/ML model (e.g., at least one of information related to the moving speed/acceleration rate of the TRP and the location information of the TRP) may be given as a notification to, for example, the UE by way of the MAC CE/DCI.

By using the NW side information for the Doppler estimation/compensation in the UE, more accurate Doppler estimation/compensation can be performed.

For example, the UE side information used as the input information to the NW side AI/ML model (e.g., at least one of the moving speed/acceleration rate of the UE, the location of the UE, the phase [result] of the RS (e.g., TRS) used for estimation, and the past (historical) Doppler shift) may be transmitted to, for example, the NW by way of the MAC CE/UCI.

By using the UE side information for the Doppler estimation/compensation in the NW, more accurate Doppler estimation/compensation can be performed.

For example, the UE may receive the output information from the NW side AI/ML model by way of the MAC CE/DCI.

By using the NW side output information for the Doppler compensation in the UE, more accurate Doppler compensation can be performed.

For example, the UE may receive the output information from the UW side AI/ML model by way of the MAC CE/UCI.

By using the UE side output information for the Doppler compensation in the NW, more accurate Doppler compensation can be performed.

The output information from the UE side/NW side AI/ML model may be used for the Doppler compensation in the HST/SFN defined in Rel. 17.

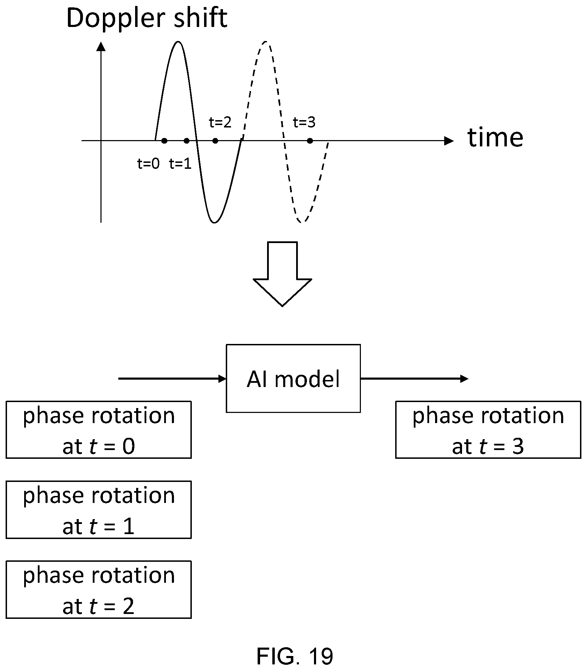

FIG. 19 is a diagram to show an example of the Doppler estimation according to the second embodiment. As shown in FIG. 19, the UE/NW uses a phase rotation at t = 0, 1, 2 as the input information to estimate a future moving rotation (t = 3) using the AI model. The UE/NW performs the Doppler compensation based on the predicted/estimated Doppler shift.

Note that the RS (e.g., TRS) in the present embodiment may be transmitted using the same method as that for the existing (defined in up to Rel. 18) TRS.

The RS (e.g., TRS) in the present embodiment may be also transmitted using the method different from that for the existing (defined in up to Rel. 18) TRS. In this case, the present embodiment may be applied adequately in combination with the first embodiment described above.

As described above, according to the second embodiment, by utilizing the AI/ML model, the Doppler compensation can be appropriately performed even utilizing the high frequency band.

### <Supplements>

### <<Notification of Information to UE>>

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### <<Notification of Information from UE>>

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### <<Application of Respective Embodiments>>

In a UE/BS, specific (one or a plurality of) processing/operation/control/assumption/information for at least one embodiment of the above-described embodiments may be applied (may be used) in a case where any one or more of conditions below are satisfied.
- A higher layer parameter indicating the above specific processing/operation/control/assumption/information is configured.
- The above specific processing/operation/control/assumption/information is decided based on a related higher layer parameter.
- The above specific processing/operation/control/assumption/information is indicated/activated/triggered by a MAC CE/DCI/UCI/resource/channel/RS.
- A specific UE capability indicating (or related to) the above specific processing/operation/control/assumption/information is reported or supported.
- Application of the specific processing/operation/control/assumption/information is judged based on a specific condition.

The specific UE capability may indicate at least one of the following:
- Supporting of the above specific processing/operation/control/assumption/information.
- Supporting of the TRS for HST.
- The number of supported TRS structures.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

In a case where none of the conditions described above is satisfied, the UE/BS may follow an operation defined in an existing 3GPP release.

### (Supplementary Note)

Regarding one embodiment of the present disclosure, the following supplementary notes of the invention will be given.

### [Supplementary Note 1-1]

A terminal including a receiving section that receives at least one of a configuration for high mobility and an indication for the high mobility, and a control section that controls reception of a downlink reference signal, based on at least one of the configuration and the indication.

### [Supplementary Note 1-2]

The terminal according to supplementary note 1-1, wherein the downlink reference signal is configured and indicated separately from a downlink reference signal for a usage other than the high mobility.

### [Supplementary Note 1-3]

The terminal according to supplementary note 1-1 or 1-2, wherein the downlink reference signal includes a plurality of types of non-zero power channel state information reference signals.

### [Supplementary Note 1-4]

The terminal according to any one of supplementary notes 1-1 to 1-3, wherein the control section controls to transmit a request for transmission of the downlink signal, based on a specific event.

### [Supplementary Note 2-1]

A terminal including a control section that performs Doppler estimation based on at least one of first output information from a first Artificial Intelligence (AI) model on a side of a terminal and second output information from a second AI model on a side of a network, and a transmitting/receiving section that applies Doppler compensation based on the Doppler estimation to transmit/receive a signal.

### [Supplementary Note 2-2]

The terminal according to supplementary note 2-1, wherein the first output information is based on at least one of input information on the side of the terminal and input information on the side of the network.

### [Supplementary Note 2-3]

The terminal according to supplementary note 2-1 or 2-2, wherein the transmitting/receiving section transmits the first output information to the network by way of at least one of a Medium Access Control (MAC) control element and uplink control information.

### [Supplementary Note 2-4]

The terminal according to any one of supplementary notes 2-1 to 2-3, wherein the transmitting/receiving section receives the second output information from the network by way of at least one of a Medium Access Control (MAC) control element and downlink control information.

### (Radio Communication System)

Hereinafter, a structure of a radio communication system according to one embodiment of the present disclosure will be described. In this radio communication system, any of the radio communication methods according to the embodiments of the present disclosure described above may be used alone or may be used in combination for communication.

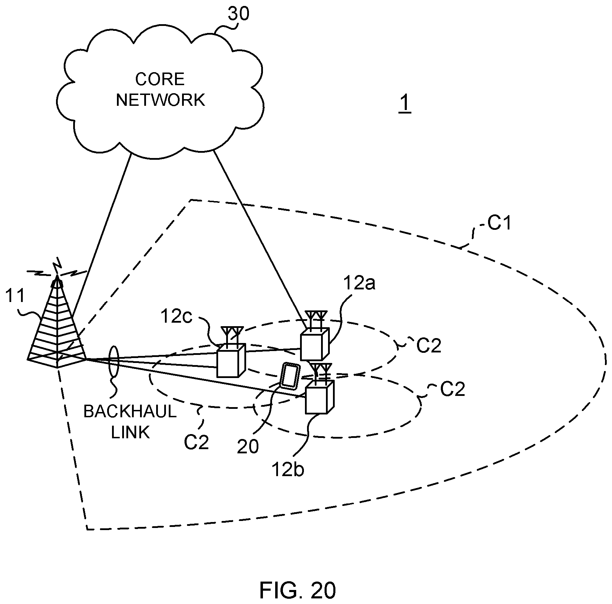

FIG. 20 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

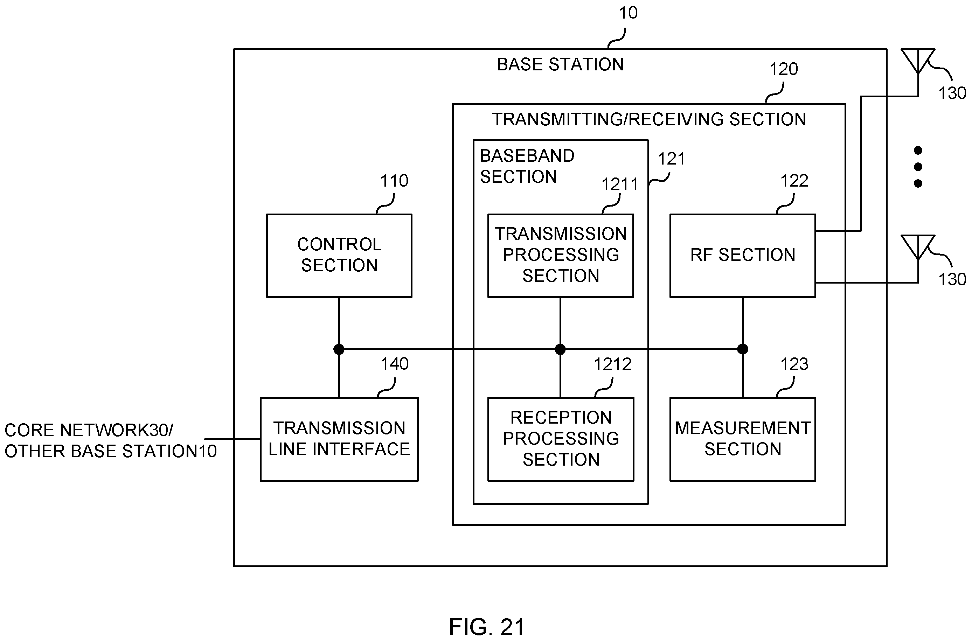

FIG. 21 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit at least one of a configuration for high mobility and an indication for the high mobility. The control section 110 may control transmission of a downlink reference signal by using at least one of the configuration and the indication (first embodiment).

The control section 110 may perform Doppler estimation based on at least one of first output information from a first Artificial Intelligence (AI) model on a side of a terminal and second output information from a second AI model on a side of a network. The transmitting/receiving section 120 may apply Doppler compensation based on the Doppler estimation to transmit/receive a signal (second embodiment).

### (User Terminal)

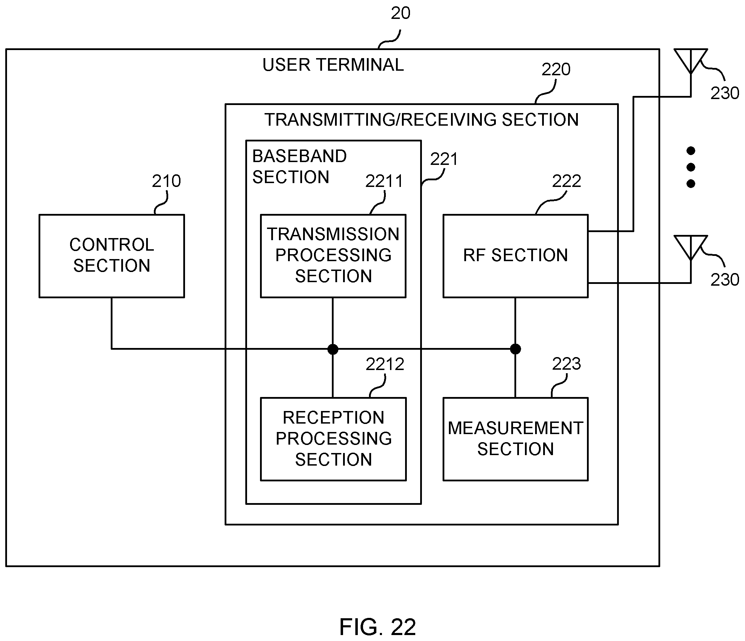

FIG. 22 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive at least one of a configuration for high mobility and an indication for the high mobility. The control section 210 may control reception of a downlink reference signal, based on at least one of the configuration and the indication (first embodiment).

The downlink reference signal may be configured and indicated separately from a downlink reference signal for a usage other than the high mobility (first embodiment).

The downlink reference signal may include a plurality of types of non-zero power channel state information reference signals (first embodiment).

The control section 210 may control to transmit a request for transmission of the downlink signal, based on a specific event (first embodiment).

The control section 210 may perform Doppler estimation based on at least one of first output information from a first Artificial Intelligence (AI) model on a side of a terminal and second output information from a second AI model on a side of a network. The transmitting/receiving section 220 may apply Doppler compensation based on the Doppler estimation to transmit/receive a signal (second embodiment).

The first output information may be based on at least one of input information on the side of the terminal and input information on the side of the network (second embodiment).

The transmitting/receiving section 220 may transmit the first output information to the network by way of at least one of a Medium Access Control (MAC) control element and uplink control information (second embodiment).

The transmitting/receiving section 220 may receive the second output information from the network by way of at least one of a Medium Access Control (MAC) control element and downlink control information (second embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

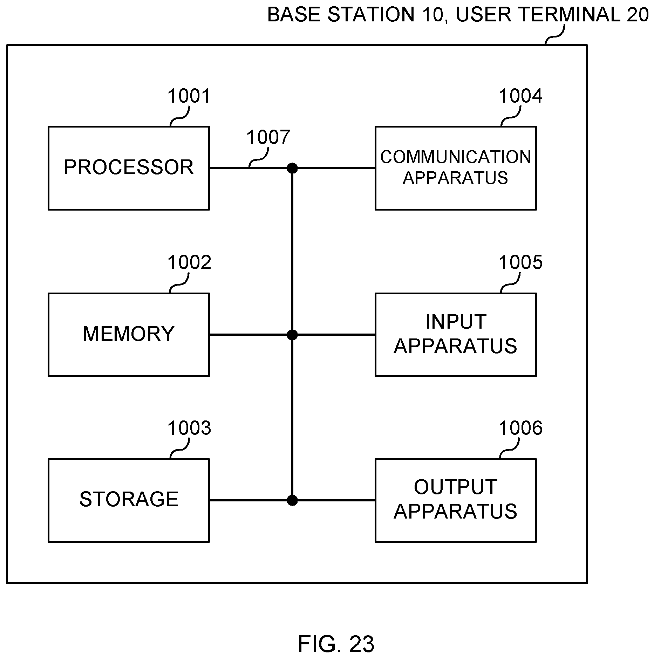

For example, a base station, a user terminal, and so on according to one embodiment of the present disclosure may function as a computer that executes the processes of the radio communication method of the present disclosure. FIG. 23 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

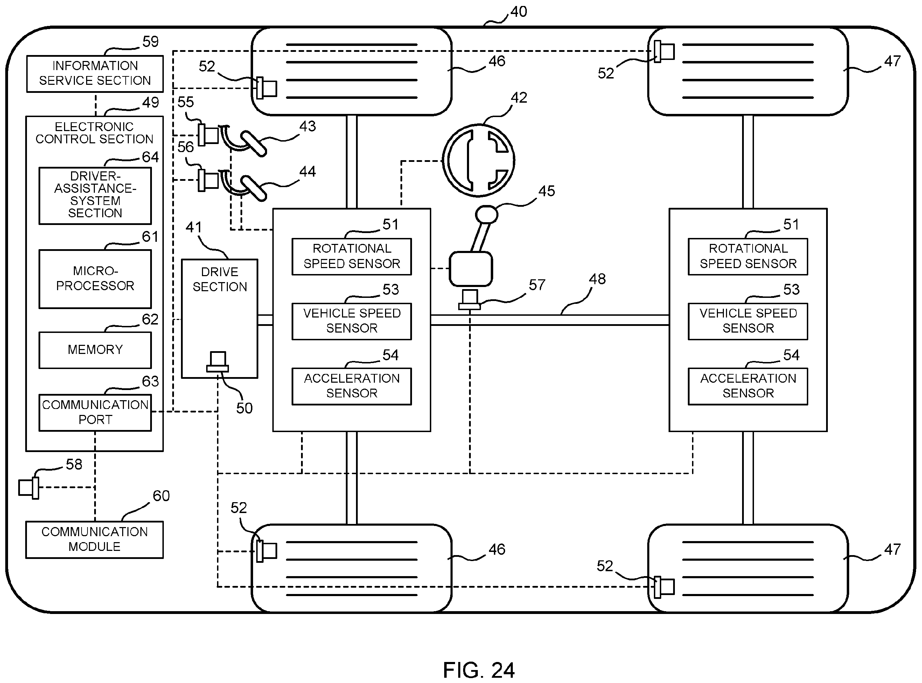

FIG. 24 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, gerunds, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure.

## Claims

1. A terminal comprising:
a receiving section that receives at least one of a configuration for high mobility and an indication for the high mobility; and
a control section that controls reception of a downlink reference signal, based on at least one of the configuration and the indication.

2. The terminal according to claim 1, wherein
the downlink reference signal is configured and indicated separately from a downlink reference signal for a usage other than the high mobility.

3. The terminal according to claim 1, wherein
the downlink reference signal includes a plurality of types of non-zero power channel state information reference signals.

4. The terminal according to claim 1, wherein
the control section controls to transmit a request for transmission of the downlink signal, based on a specific event.

5. A radio communication method for a terminal, the radio communication method comprising:
receiving at least one of a configuration for high mobility and an indication for the high mobility; and
controlling reception of a downlink reference signal, based on at least one of the configuration and the indication.

6. A base station comprising:
a transmitting section that transmits at least one of a configuration for high mobility and an indication for the high mobility; and
a control section that controls transmission of a downlink reference signal, by using at least one of the configuration and the indication.
